# EUROPÄISCHE PATENTSCHRIFT

(11) **EP 3 574 238 B1**
(45) Veröffentlichungstag und Bekanntmachung des Hinweises auf die Patenterteilung: **04.12.2024**
(21) Anmeldenummer: 18703367.5
(22) Anmeldetag: 23.01.2018
(51) Int. Cl.: F16K 3/04, F16K 11/074, F16K 25/00, G01N 30/20

(54) **FLUIDVENTIL MIT GOLDHALTIGER UND/ODER PLATINHALTIGER BESCHICHTUNG**
FLUID VALVE HAVING A COATING CONTAINING GOLD AND/OR PLATINUM
VANNE À FLUIDE DOTÉE D'UN REVÊTEMENT CONTENANT DE L'OR ET/OU DU PLATINE

(30) Priorität: 27.01.2017 DE 102017101629
(43) Veröffentlichungstag der Anmeldung: 04.12.2019
(73) Patentinhaber: Agilent Technologies, Inc., Santa Clara, CA 95051 (US)
(72) Erfinder: ZIEGLER, Tony, 76337 Waldbronn (DE); ZEKO, Darijo, 76337 Waldbronn (DE); ORTMANN, Thomas, 76337 Waldbronn (DE)
(74) Vertreter: Dilg, Haeusler, Schindelmann Patentanwaltsgesellschaft mbH
(86) Internationale Anmeldenummer: PCT/IB2018/050393
(87) Internationale Veröffentlichungsnummer: WO 2018/138626

(56) Entgegenhaltungen:
- EP-A1- 0 469 913
- EP-A1- 0 923 727
- EP-A1- 1 058 522
- EP-A1- 1 420 197
- WO-A1-2016/156152
- DE-A1- 102016 108 101
- DE-U- 6 610 019
- US-A- 4 044 993
- US-A- 4 243 071
- US-A- 6 098 655
- US-A1- 2010 171 055
- US-A1- 2013 284 959
- US-B1- 6 412 751
- US-B1- 7 028 705
- US-B2- 8 876 081

## Beschreibung

### TECHNISCHER HINTERGRUND

Die vorliegende Erfindung betrifft ein Fluidventil, ein Probentrenngerät und ein Verfahren zum Herstellen eines Fluidventils.

In einer HPLC wird typischerweise eine Flüssigkeit (mobile Phase) bei einer sehr genau kontrollierten Flussrate (zum Beispiel im Bereich von Mikrolitern bis Millilitern pro Minute) und bei einem hohen Druck (typischerweise 20 bis 1000 bar und darüber hinausgehend, derzeit bis zu 2000 bar), bei dem die Kompressibilität der Flüssigkeit spürbar ist, durch eine sogenannte stationäre Phase (zum Beispiel in einer chromatografischen Säule), bewegt, um einzelne Komponenten einer in die mobile Phase eingebrachten Probenflüssigkeit voneinander zu trennen. Ein solches HPLC-System ist zum Beispiel aus der EP 0,309,596 B1 derselben Anmelderin, Agilent Technologies, Inc. bekannt.

Ein solches HPLC-System hat häufig ein oder mehrere Fluidventile. Besonders bei hohen Drücken ist eine zuverlässige fluidische Abdichtung herausfordernd und ist die Beanspruchung der Komponenten des Fluidventils hoch.

US 8,876,081 B2 zeigt ein Ventil für eine HPLC-Anwendung wobei als Beschichtung zur Reduktion von Reibung eine Diamond-Like Carbon (DLC) Beschichtung verwendet wird.

### OFFENBARUNG

Es ist eine Aufgabe der Erfindung, ein Schalten eines Fluidventils in einem Probentrenngerät mit hoher Dichtigkeit und geringer Abnutzung zu ermöglichen. Die Aufgabe wird mittels der unabhängigen Ansprüche gelöst. Weitere Ausführungsbeispiele sind in den abhängigen Ansprüchen gezeigt.

Gemäß der vorliegenden Erfindung ist ein Fluidventil (d.h. ein Ventil zum Steuern von Fluid, wobei ein Fluid ein Gas und/oder eine Flüssigkeit, optional aufweisend Feststoffpartikel, sein kann) für ein Probentrenngerät (zum Beispiel ein Flüssigchromatografiegerät) geschaffen, wobei das Fluidventil eine erste Ventilkomponente (mit einer Kontaktfläche, weiter insbesondere einer Berührfläche mit einer zweiten Ventilkomponente, wobei die erste Ventilkomponente zum Beispiel als Rotoreinrichtung ausgebildet sein kann) und eine zweite Ventilkomponente (mit einer Kontaktfläche, weiter insbesondere einer Berührfläche mit der ersten Ventilkomponente, wobei die zweite Ventilkomponente zum Beispiel als Statoreinrichtung ausgebildet sein kann) aufweist, wobei die erste Ventilkomponente und die zweite Ventilkomponente (insbesondere an den Kontaktflächen) aneinander angrenzen, relativ zueinander beweglich (zum Beispiel rotierbar oder längsverschiebbar) sind, und derart eingerichtet sind, dass in zumindest einem Schaltzustand zwischen diesen mindestens ein schaltbarer (insbesondere durch eine Relativbewegung der Ventilkomponenten zueinander schaltbarer) Fluidkanal gebildet ist, und wobei zumindest ein Teil einer (insbesondere äußeren und/oder inneren) Oberfläche (insbesondere der Kontaktfläche) von zumindest einer der ersten Ventilkomponente und der zweiten Ventilkomponente mit einer goldhaltigen und/oder platinhaltigen Beschichtung versehen ist.

Gemäß einem anderen exemplarischen Ausführungsbeispiel ist ein Probentrenngerät zum Trennen einer fluidischen Probe (insbesondere in unterschiedliche Fraktionen, die sich hinsichtlich mindestens einer Trenneigenschaft unterscheiden können) bereitgestellt, wobei das Probentrenngerät ein Fluidventil mit den oben beschriebenen Merkmalen aufweist.

Erfindungsgemäß ist ein Verfahren zum Herstellen eines Fluidventils für ein Probentrenngerät gemäß Anspruch 14 bereitgestellt,
wobei bei dem Verfahren eine erste Ventilkomponente und eine zweite Ventilkomponente derart bereitgestellt werden, dass diese aneinander angrenzen und relativ zueinander beweglich sind, die erste Ventilkomponente und die zweite Ventilkomponente derart ausgebildet werden, dass zwischen diesen in zumindest einem Schaltzustand mindestens ein schaltbarer Fluidkanal gebildet ist, und zumindest ein Teil einer Oberfläche von zumindest einer der ersten Ventilkomponente und der zweiten Ventilkomponente mit einer goldhaltigen und/oder platinhaltigen Beschichtung versehen wird.

Gemäß der Erfindung ist ein Fluidventil geschaffen, bei dem zumindest ein Teil einer Oberfläche von zumindest einem von zwei zueinander relativ beweglichen Ventilkomponenten mit einer goldhaltigen bzw. Gold aufweisenden Beschichtung versehen ist. Überraschenderweise hat sich herausgestellt, dass eine solche goldhaltige Oberfläche an einer Kontaktfläche zwischen den Ventilkomponenten eine Schmierung zwischen den einander gegenüberliegenden und aneinander während eines Schaltvorgangs abgleitenden Ventilkomponenten schafft, so dass bei Vorsehen einer goldhaltigen Beschichtung auch im Langzeitbetrieb mit nur sehr geringem Abrieb zwischen den Ventilkomponenten zu rechnen ist. Ein derartiges Fluidventil hat daher eine hohe Lebensdauer. Synergistisch mit dem beschriebenen Schmiereffekt sorgt eine goldhaltige Beschichtung auf der oder den Kontaktflächen auch dafür, dass bei einem Schaltvorgang eine gewisse Ausgleichsfähigkeit zwischen den Ventilkomponenten bereitgestellt wird. Die Goldbeschichtung ist je nach Härtegrad in der Lage, zum Beispiel im Falle von toleranzbedingten oder durch eine anders erzeugte geringfügige Fehlausrichtung zwischen den Ventilkomponenten bedingten lokal hohen Kräfte auszugleichen, indem das Goldmaterial anschaulich der Belastung ausweicht. Durch diese Zusatzfunktion der goldhaltigen Beschichtung an der Kontaktfläche wird die Lebensdauer des Fluidventils zusätzlich erhöht. Mit Vorteil wirkt die Goldbeschichtung darüber hinaus biokompatibel, das heißt wechselwirkt sehr gering oder nicht in einer unerwünschten Weise mit einem Fluid (insbesondere einer Flüssigkeit wie einem Lösungsmittel oder einer biologischen Probe), das während des Schaltens des Fluidventils durch den zwischen den Ventilkomponenten gebildeten mindestens einen Fluidkanal fließen kann. Auf diese Weise vermeidet eine goldhaltige Beschichtung einer Oberfläche von Fluidstrukturen/Mikrostrukturen unerwünschte Effekte wie Korrosion, vermehrte Probenanhaftung, das Entstehen unerwünschter chemischer Reaktionsprodukte oder unerwünschte Veränderungen des mit dem Fluidventil verarbeiteten Fluids, einer unerwünschten Veränderung des mit dem Fluidventil verarbeiteten Fluids, etc. Bei der Beschichtung einer ihrerseits mehrkomponentigen Ventilkomponente, die aus mehreren gebondeten Elementen oder Körpern aufgebaut ist (zum Beispiel eine Rotoreinrichtung, die aus mehreren aneinander gebondeten Rotorelementen aufgebaut ist), fördert die goldhaltige Beschichtung an einer oder beiden gegenüberliegenden Bondoberflächen die Festigkeit des einstückigen Bondens. Dadurch kann ein intrinsischer Zusammenhalt der entsprechenden Ventilkomponente zuverlässig sichergestellt werden.

Alternativ oder ergänzend zu Gold ist auch Platin ein leistungsstarkes Material für die Beschichtung der jeweiligen Oberfläche. Insbesondere zeigt Platin eine ausgeprägte Biokompatibilität und kann auch die oben für Gold beschriebenen Vorteile in ähnlicher bzw. entsprechender Weise bereitstellen.

Gemäß exemplarischen Ausführungsbeispielen der Erfindung kann die goldhaltige Schicht oder die Goldschicht, insbesondere Hartgoldschicht, auf viele Materialien aufgebracht werden. Zum Beispiel ist dies auch auf einer Unterlage aus Kupfer möglich. Dies erlaubt es, die duktilen Eigenschaften (insbesondere Verformbarkeit) bzw. die sehr gute Wärmeleitung dieses Materials nutzen.

Ein ebenfalls biokompatibles anderes Ausführungsbeispiel einer Ventilkomponente (d.h. eines Rotors bzw. eines Stators) stellt eine Platinbeschichtung dar. Diese kann ebenfalls galvanisch (d.h. nicht selektiv) abgeschieden werden. Aufgrund des sauren Platinbades sollte das Substrat (zum Beispiel eine Ventilkomponente) konfiguriert sein, diesem Säureangriff standzuhalten. Vorteilhaft ist diesbezüglich bei sehr vielen Substraten eine Vorvergoldung vor Aufbringen der platinhaltigen Beschichtung bzw. Platinbeschichtung. Alternativ kann eine solche Platinschicht über ein (insbesondere selektives) Sputterverfahren auf den Oberflächen eines Substrates (zum Beispiel eines Rotor-Substrates oder einer anderen Ventilkomponente) aufgebracht werden. Einsetzbare Substrate sind zum Beispiel Metalle wie beispielsweise Kupfer, Stahl, Palladium oder Wolfram, Gläser (insbesondere mit Haftvermittler) oder höher schmelzende Kunststoffe wie zum Beispiel PEEK, oder eine oder mehrere Keramiken.

Eine Beschichtung aus Platin hat den besonderen Vorteil, dass daran ein unerwünschtes Anhaften von Biomolekülen (zum Beispiel Proteinen) praktisch nicht stattfindet.

Im Rahmen der vorliegenden Anmeldung wird unter dem Begriff "goldhaltig" insbesondere ein Material der Beschichtung an einer Oberfläche verstanden, das nicht nur unwesentliche Spuren von Gold aufweist. Zum Beispiel kann die Goldkomponente der Beschichtung mindestens 1 Gewichtprozent Gold, insbesondere mindestens 10 Gewichtprozent Gold, weiter insbesondere mindestens 50 Gewichtprozent Gold, vorzugsweise mindestens 90 Gewichtprozent Gold, besonders bevorzugt mindestens 99 Gewichtprozent Gold (zum Erreichen einer besonders hohen Biokompatibilität), aufweisen.

Im Rahmen der vorliegenden Anmeldung wird unter dem Begriff "platinhaltig" insbesondere ein Material der Beschichtung an einer Oberfläche verstanden, das nicht nur unwesentliche Spuren von Platin aufweist. Zum Beispiel kann die Platinkomponente der Beschichtung mindestens 1 Gewichtprozent Platin, insbesondere mindestens 10 Gewichtprozent Platin, weiter insbesondere mindestens 50 Gewichtprozent Platin, vorzugsweise mindestens 90 Gewichtprozent Platin, besonders bevorzugt mindestens 99 Gewichtprozent Platin (zum Erreichen einer besonders hohen Biokompatibilität), aufweisen.

Im Rahmen der vorliegenden Erfindung wird unter dem Begriff "Ventilkomponente" ein Ventilkörper verstanden, der relativ zu einer anderen Ventilkomponente während eines Schaltvorgangs des Fluidventils bewegt werden kann. Gemäß einem bevorzugten Ausführungsbeispiel sind die beiden Ventilkomponenten eine Rotoreinrichtung und eine Statoreinrichtung eines fluidischen Ventils. Es ist alternativ aber zum Beispiel auch möglich, das Schalten des Fluidventils durch eine Longitudinalbewegung zwischen zwei zusammenwirkenden Ventilkomponenten zu bewerkstelligen.

Im Rahmen der vorliegenden Anmeldung wird unter dem Begriff "Oberfläche" einer Ventilkomponente insbesondere eine innere und/oder äußere Grenz- oder Berührfläche der Ventilkomponente verstanden. Teile einer solchen Oberfläche können insbesondere eine Kontaktfläche zwischen den fluiddicht zusammenwirkenden Ventilkomponenten und/oder eine innere Bondfläche zwischen gebondeten Einzelkörpern einer Ventilkomponente und/oder eine in Fluidkontakt stehende Oberfläche zur Begrenzung eines Fluidkanals oder einer Fluidstruktur der Ventilkomponente(n) sein.

Im Weiteren werden zusätzliche Ausgestaltungen des Fluidventils, des Verfahrens sowie des Probentrenngeräts beschrieben.

Erfindungsgemäß weist die erste Ventilkomponente als Teil der Oberfläche eine Kontaktfläche und die zweite Ventilkomponente als Teil der Oberfläche eine Kontaktfläche auf, wobei die erste Ventilkomponente und die zweite Ventilkomponente an den Kontaktflächen aneinander angrenzen (insbesondere einander berühren). Im Rahmen der vorliegenden Anmeldung wird unter dem Begriff "Kontaktfläche" einer Ventilkomponente insbesondere eine Grenz- oder Berührfläche der Ventilkomponente zu einer mit dieser Ventilkomponente zusammenwirkenden anderen Ventilkomponente verstanden werden, an welcher Grenz- oder Berührfläche eine fluiddichte Schnittstelle zwischen den Ventilkomponenten gebildet ist. Simultan kann der in mindestens einem Schaltzustand des Fluidventils zwischen den Ventilkomponenten gebildete mindestens eine Fluidkanal durch die besagte Grenz- oder Berührfläche hindurchlaufen.

Erfindungsgemäß ist zumindest ein Teil der Kontaktfläche von zumindest einer der ersten Ventilkomponente und der zweiten Ventilkomponente mit der goldhaltigen Beschichtung versehen. Eine goldhaltige und/oder platinhaltige Beschichtung mindestens einer solchen Kontaktfläche begünstigt eine Schmierung und einen Ausgleich der Ventilkomponenten und sorgt für einen verschleißarmen Betrieb (tribologisch optimiert).

Gemäß einem Ausführungsbeispiel kann die Beschichtung an mindestens einer gesamten der beiden Kontaktflächen zwischen der ersten Ventilkomponente und der zweiten Ventilkomponente ausgebildet sein. Indem eine gesamte Kontaktfläche zwischen den beiden Ventilkomponenten des Fluidventils durchgehend eine goldhaltige und/oder platinhaltige Beschichtung aufweist, die vollständig von einer der beiden Ventilkomponenten oder durchgehend von beiden Ventilkomponenten bereitgestellt sein kann, so ist sichergestellt, dass es an keiner Stelle im Kontaktbereich zwischen den Ventilkomponenten zu einer abrieb- oder verschleißfördernden, tribologischen Materialkonstellation kommen kann.

Gemäß einem Ausführungsbeispiel kann die Beschichtung an der Kontaktfläche der ersten Ventilkomponente und auf der Kontaktfläche der zweiten Ventilkomponente ausgebildet sein. Wenn beide einander gegenüberliegende und tribologisch zusammenwirkende Kontaktflächen der beiden Ventilkomponenten ganz oder teilweise mit einer goldhaltigen und/oder platinhaltigen Beschichtung versehen sind, sind die beschriebenen Wirkungen im Hinblick auf Schmierung, Ausgleichsfähigkeit und Biokompatibilität besonders ausgeprägt.

Gemäß einem Ausführungsbeispiel kann der Kontaktfläche von zumindest einer der ersten Ventilkomponente und der zweiten Ventilkomponente als anderer Teil der Oberfläche eine Gegenfläche mit mindestens einer Fluidstruktur mit einem weiteren Teil der Oberfläche gegenüberliegen. Kontaktfläche und Gegenfläche können zueinander parallel sein. Die strukturierte Fläche oder Strukturfläche kann im Inneren einer zwei- oder mehrkomponentigen Ventilkomponente liegen, zum Beispiel an der Grenzfläche zwischen zwei Rotorelementen einer Rotoreinrichtung, die aneinander gebondet sind oder ggf. lediglich aufeinander liegen. Die Fluidstrukturen können Teil der mindestens einen Fluidleitung sein, die zwischen den Ventilkomponenten gebildet sein kann. Zum Beispiel können die Fluidstrukturen Nuten und/oder Fluidanschlüsse sein, deren begrenzende Wandungen den genannten Oberflächenteil bilden.

Gemäß einem Ausführungsbeispiel kann zumindest ein Teil von mindestens einer der Fluidstrukturen und/oder der Gegenfläche mit der goldhaltigen und/oder platinhaltigen Beschichtung versehen sein. Bei den Fluidstrukturen kann diese Beschichtung zu einer Biokompatibilität und somit einem stark beschädigungsreduzierten Betrieb des Fluidventils ungeachtet des eingesetzten Fluids führen. Bei der Gegenfläche kann die Beschichtung die Verbindbarkeit (zum Beispiel mittels Bondens) einer Ventilteilkomponente mit einer anderen Ventilteilkomponente fördern.

Gemäß einem Ausführungsbeispiel kann die Gegenfläche an der Beschichtung mit einem Abdeckkörper gebondet sein. Ein Bonden (oder ein anderes Fügen) des Abdeckkörpers (zum Beispiel ein Rotorelement) mit einem anderen Körper der Ventilkomponente (zum Beispiel ein anderes Rotorelement) kann durch die Goldhaltigkeit bzw. Platinhaltigkeit der Beschichtung gefördert werden. Der gebildete Verbund kann aufgrund der goldhaltigen und/oder platinhaltigen Beschichtung chemisch besonders stabil ausgebildet werden. Ein Nachvergolden der Außenflächen und der Verbindungsstrukturen ist, falls nötig, ebenfalls möglich. Auch ein nachträgliches Aufbringen von Platin ist entsprechend möglich.

Gemäß einem Ausführungsbeispiel kann zumindest ein Teil (zum Beispiel eine Teilschicht einer mehrschichtigen Beschichtung) der Beschichtung Hartgold aufweisen oder daraus bestehen. Unter Hartgold kann in diesem Zusammenhang eine Legierung mit einer Hauptkomponente aus Gold (insbesondere größer 99 Gewichtsprozent), Spuren von Kohlenstoff (zum Beispiel bis zu 0,7 Gewichtsprozent) und einem Additiv (zum Beispiel Nickel und/oder Cobalt, zum Beispiel 0,2 bis 0,3 Gewichtsprozent) verstanden werden, was zu einer höheren Härte als Gold führt. Es hat sich herausgestellt, dass eine Beschichtung aus Hartgold hinsichtlich Schmierung, Ausgleichsfähigkeit, Härte und Biokompatibilität besonders vorteilhafte Eigenschaften aufweist. Derart an der Kontaktfläche zwischen den Ventilkomponenten beschichtete Fluidventile zeigen hervorragende Lebensdauern und sind besonders verschleißarm.

Gemäß einem Ausführungsbeispiel kann zumindest ein Teil (zum Beispiel eine Teilschicht einer mehrschichtigen Beschichtung) der Beschichtung Kobalt in einem Bereich zwischen 0,05 Gewichtprozent und 1 Gewichtprozent, insbesondere in einem Bereich zwischen 0,2 Gewichtprozent und 0,3 Gewichtprozent, und ansonsten Gold aufweisen. Die Goldkomponente fördert besonders Ausgleichsfähigkeit und Biokompatibilität, wobei die Kobaltkomponente eine gute Schmierfähigkeit und eine besondere Härtung der Beschichtung bewirkt. Allerdings ist es besonders vorteilhaft, wenn die Kobaltkomponente innerhalb der beschriebenen Wertebereiche für die Kobaltkomponente, höchst vorteilhaft innerhalb des engeren der beiden beschriebenen Wertebereiche für die Kobaltkomponente, liegt. Werden die Wertebereiche der Kobaltkomponente deutlich unterschritten, so reduziert sich die Schmierfähigkeit der Beschichtung. Werden die Wertebereiche der Kobaltkomponente deutlich überschritten, droht die Beschichtung nicht mehr höchsten Anforderungen an Biokompatibilität zu genügen. Die Biokompatibilität der Beschichtung wird durch die Eigenschaften von Gold gefördert, das reaktionsträge auch in Bezug auf aggressive Chemikalien und Bioflüssigkeiten ist.

Gemäß einem Ausführungsbeispiel kann die platinhaltige Beschichtung besonders vorteilhaft ausgebildet werden, indem eine jeweilige Oberfläche zunächst vorvergoldet wird (d.h. insbesondere mit einer goldhaltigen Schicht versehen wird, zum Beispiel Reingold) und nachfolgend eine Platin aufweisende oder aus Platin bestehende Schicht aufgebracht wird (insbesondere durch Sputtern, PVD). Bei einer Realisierung der Beschichtung unter Verwendung von Platin ist also das Ausbilden einer Doppelschicht vorteilhaft, d.h. eine Schicht eines ersten Materials direkt auf einer Oberfläche und das nachfolgende Aufbringen von Platin auf dieser Schicht. Allerdings ist es auch möglich, Platin direkt auf einen Untergrund aufzubringen (zum Beispiel auf Basis eines sauren Bads).

Gemäß einem Ausführungsbeispiel kann genau eine der ersten Ventilkomponente und der zweiten Ventilkomponente mit der goldhaltigen und/oder platinhaltigen Beschichtung versehen sein und die andere der ersten Ventilkomponente und der zweiten Ventilkomponente mit einer anderen Beschichtung aus einem anderen Material versehen sein. Das Material der anderen Beschichtung kann eine höhere Härte als das Material der goldhaltigen und/oder platinhaltigen Beschichtung haben. Gemäß einem besonders bevorzugten Ausführungsbeispiel sind die einander gegenüberliegenden Ventilkomponenten an ihren Kontaktflächen mit unterschiedlichen Materialien beschichtet. Sehr vorteilhaft ist die Beschichtung von einer der beiden Ventilkomponenten, insbesondere einer Rotoreinrichtung, mit der goldhaltigen und/oder platinhaltigen Beschichtung. Die gegenüberliegende Kontaktfläche einer vorzugsweise als Statoreinrichtung ausgebildeten Ventilkomponente kann dagegen mit einem speziell auf ihre Bedürfnisse zugeschnittenen anderen Material beschichtet sein, um die zusammenwirkenden Eigenschaften zwischen den einander gegenüberliegenden Kontaktflächen zu verbessern. Zum Beispiel kann das andere Material der anderen Beschichtung eine höhere Härte (und eine andere Rauheit) als das Material der goldhaltigen und/oder platinhaltigen Beschichtung haben. Die Anpassung dieser Eigenschaften kann sich auf das tribologische System (das heißt die auf einander gegenüberliegende Reibflächen bezogenen Laufeigenschaften) beziehen, auf die Härte, die (Bio)-Kompatibilität, auf die Schmierfähigkeit, auf die Ausgleichsfähigkeit des Beschichtungsmaterials oder allgemeiner ausgedrückt auf die Verbesserung der Verschleißarmut des Fluidventils.

Gemäß einem Ausführungsbeispiel kann eine Beschichtung aus dem anderen Material Diamant oder Diamond-Like Carbon (DLC) aufweisen oder daraus bestehen. Als besonders vorteilhaft hat sich herausgestellt, die erste Beschichtung aus Hartgold mit Kobaltkomponente und die zweite Beschichtung, die von der beschriebenen ersten Beschichtung unterschiedlich ist, aus Diamant oder DLC auszubilden. Letztere Materialien weisen eine besonders hohe Härte auf und mindern zuverlässig einen Abrieb bzw. Verschleiß der damit beschichteten Ventilkomponente. Mit einer metallischen Beschichtung (insbesondere aus Hartgold) kann eine hohe Biokompatibilität erreicht werden, mit einer Beschichtung mittels DLC sogar eine Bioinertheit.

Gemäß einem Ausführungsbeispiel kann die Beschichtung mehrere Schichten aufweisen. Eine solche Mehrlagenbeschichtung ist eine wirksame Maßnahme, die gewünschten Eigenschaften der Beschichtung zwischen den Ventilkomponenten einzustellen. Insbesondere eine Doppelbeschichtung, das heißt eine Beschichtung mit genau zwei Schichten unterschiedlicher Materialien, hat sich als vernünftiger Ausgleich zwischen dem herstellungstechnischen Aufwand und den erreichbaren Eigenschaften herausgestellt.

Gemäß einem Ausführungsbeispiel kann eine erste Schicht direkt auf einem Grundkörper der jeweiligen Ventilkomponente Reingold und eine zweite Schicht auf der ersten Beschichtung Hartgold aufweisen. Unter einer Reingoldkomponente wird hierbei insbesondere eine Komponente verstanden, die im Wesentlichen oder vollständig aus Gold besteht. Die darüber angeordnete, außenseitige Hartgoldkomponente bildet die eigentliche Kontaktfläche zu der gegenüberliegenden Ventilkomponente.

Gemäß einem Ausführungsbeispiel kann ein Grundkörper der jeweiligen Ventilkomponente, auf dem die Beschichtung angeordnet ist, Metall aufweisen, insbesondere Stahl. Der Grundkörper der Ventilkomponenten kann aufgrund der vorteilhaften Eigenschaften der Beschichtungen annähernd frei gewählt werden. Eine metallische Komponente, insbesondere eine Stahlkomponente, weiter insbesondere Edelstahl, ist hierbei eine gute Materialwahl im Hinblick auf die Härte und Fertigbarkeit der Ventilkomponente. Es ist auch möglich, eine der Ventilkomponenten aus blankem Stahl auszubilden. Allerdings sind andere Materialien, wie zum Beispiel eine Keramik oder dergleichen, möglich. Eine metallische, insbesondere aus Stahl gebildete, Ventilkomponente hat allerdings den Vorteil einer besonders guten und einfachen Beschichtbarkeit mit der goldhaltigen und/oder platinhaltigen Schicht. Schichtablösungen oder unerwünschte chemische Phänomene an einer Grenzfläche zwischen der metallischen Ventilkomponente und der goldhaltigen und/oder platinhaltigen Beschichtung sind mit Vorteil unterdrückt.

Gemäß einem Ausführungsbeispiel können die erste Ventilkomponente und die zweite Ventilkomponente derart relativ zueinander bewegbar sein, um dadurch mindestens zwei unterschiedliche Fluidkopplungszustände (zum Beispiel fluidisch gekoppelt und fluidisch entkoppelt) des mindestens einen Fluidkanals einzustellen. Zum Beispiel kann in einem ersten Fluidkopplungszustand eine fluidische Verbindung durch das Fluidventil hinweg ermöglicht werden. Hingegen kann in einem zweiten Fluidkopplungszustand eine solche fluidische Kopplung verunmöglicht sein. Es ist auch möglich, dass in unterschiedlichen Fluidkopplungszuständen unterschiedliche fluidische Pfade durch die Ventilkomponente hinweg ermöglicht sind. Durch die Relativbewegung der Ventilkomponenten zueinander können die einzelnen Fluidkopplungszustände eingestellt werden.

Gemäß einem Ausführungsbeispiel kann der mindestens eine Fluidkanal aus mindestens einer Nut in der ersten Ventilkomponente (zum Beispiel eine Rotoreinrichtung) und mindestens zwei Fluidanschlüssen (zum Beispiel Ports) an der zweiten Ventilkomponente (zum Beispiel eine Statoreinrichtung) gebildet sein, wobei in unterschiedlichen Schaltzuständen des Fluidventils die Fluidanschlüsse in unterschiedliche fluidische Kopplungszustände mit der mindestens einen Nut bringbar sind. Mit Vorteil können an einer Statorkomponente eines Fluidventils zwei oder mehr Fluidanschlüsse vorgesehen sein, die mit anderen fluidischen Komponenten (zum Beispiel über Kapillaren oder Schlauchverbindungen) fluidisch gekoppelt werden können. Die eigentlichen fluidischen Verbindungen werden dann durch eine oder mehrere schaltbare Nuten, die vorzugsweise an einer Kontaktfläche oder axial versetzt zu der Kontaktfläche einer als Rotoreinrichtung ausgebildeten Ventilkomponente vorgesehen sind, bewerkstelligt. In den entsprechenden Fluidkopplungszuständen können die Nuten wahlweise mit bestimmten Fluidanschlüssen in Fluidverbindung gebracht oder von diesen fluidisch entkoppelt werden.

Gemäß einem Ausführungsbeispiel kann die erste Ventilkomponente als gegenüber einem Laborsystem rotierbare Rotoreinrichtung ausgebildet sein und die zweite Ventilkomponente als gegenüber einem Laborsystem in Ruhe befindliche Statoreinrichtung ausgebildet sein, die relativ zueinander rotierfähig sind. Die Ausgestaltung als Rotorventil sorgt für eine besonders kompakte Konfiguration, bei der viele unterschiedliche Fluidkopplungszustände mit geringem Aufwand eingestellt werden können. Alternativ ist aber auch eine Ausgestaltung als Verschiebeventil möglich, bei dem durch eine Längsverschiebung zwischen den beiden Ventilkomponenten unterschiedliche Fluidkopplungszustände durch die zwischen den Ventilkomponenten gebildeten einen oder mehreren Fluidkanäle ermöglicht werden.

Gemäß einem Ausführungsbeispiel kann die erste Ventilkomponente bei Ausgestaltung als Rotoreinrichtung ein erstes Rotorelement und ein zweites Rotorelement aufweisen, die insbesondere aneinander gebondet sein können. Das erste Rotorelement kann zumindest einen Teil der mindestens einen Fluidleitung definieren (zum Beispiel mindestens eine Nut und/oder mindestens einen fluidischen Durchgang aufweisen). Dagegen kann das zweite Rotorelement eine Abdeckung des ersten Rotorelements bilden (insbesondere von Elementen der Fluidleitung frei sein, und zum Beispiel durch Abdeckung einer Nut des ersten Rotorelements einen umfänglich geschlossenen kapillarartigen Leitungsabschnitt bilden). Die Ausbildung einer Rotorkomponente (und/oder einer Statorkomponente) aus zwei (oder mehr) Einzelkörpern, die miteinander verbunden werden, hat sich als besonders vorteilhaft herausgestellt. Dadurch können fluidische Kanäle auch im Inneren einer Rotoreinrichtung mit geringem Aufwand in einem der beiden Rotorelemente gebildet werden, bevor die beiden Rotorelemente aneinander zum Ausbilden einer dann einstückigen Rotoreinrichtung gebondet werden. Ein solches Bonden fügt die Rotorelemente derart aneinander, dass diese anschließend aneinander im Grenzbereich miteinander verschmolzen sind (zum Beispiel durch Ultraschall- und/oder Thermokompressionsbonden). Dadurch können selbst komplexe fluidische Strukturen im Inneren einer Rotorkomponente ausgebildet werden, ohne dass der damit verbundene fluidtechnische Aufwand übermäßig groß wird.

Gemäß einem Ausführungsbeispiel kann das erste Rotorelement als zumindest einen Teil einer ersten Fluidleitung eine (zum Beispiel in einer Ebene senkrecht zu einer Rotationsachse verlaufende) Nut auf einer der beiden gegenüberliegenden Hauptflächen und als zumindest einen Teil einer zweiten Fluidleitung mindestens einen (zum Beispiel parallel zu einer Rotationsachse verlaufenden) Durchgang durch das erste Rotorelement und eine damit fluidisch gekoppelte Nut (zum Beispiel in einer Ebene senkrecht zu einer Rotationsachse verlaufende) auf der anderen der beiden gegenüberliegenden Hauptflächen aufweisen. Zwei in zueinander gegenüberliegenden Hauptflächen ausgebildete Nuten, die mit einem oder mehreren senkrecht hierzu verlaufenden Durchgängen miteinander verbunden werden (alternativ können die Durchgänge auch schräg gebohrt werden), bewirken eine hohe fluidische Leistungsfähigkeit einer so ausgebildeten Rotoreinrichtung. Insbesondere können damit unerwünschte fluidische Überschneidungen beim Schalten eines Fluidventils vermieden werden, wenn zum Beispiel eine sich in Radialrichtung erstreckende Nut nicht in unerwünschte Fluidverbindung mit sich zum Beispiel in Tangentialrichtung erstreckenden Nuten gebracht werden soll. Anschaulich kann dann eine der beiden Nuten durch die beschriebene Ausgestaltung der Rotoreinrichtung in eine andere Ebene verlegt werden und kann somit anschaulich die damit nicht in Fluidverbindung zu bringende andere Nut fluidisch untertunneln. Auf diese Weise können (zum Beispiel in zwei oder mehr Ebenen) auch komplexe fluidische Strukturen in einem kompakten Fluidventil integriert werden.

Gemäß einem anderen Ausführungsbeispiel kann die erste Ventilkomponente als zumindest einen Teil einer ersten Fluidleitung eine Nut auf einer der zweiten Ventilkomponente zugewandten Hauptfläche und als zumindest ein Teil einer zweiten Fluidleitung mindestens einen Durchgang durch zumindest einen Teil der ersten Ventilkomponente und einen damit fluidisch gekoppelten Leitungsabschnitt aufweisen. Insbesondere kann sich die Nut einerseits und der Leitungsabschnitt andererseits über unterschiedliche Radialbereiche der ersten Ventilkomponente erstrecken.

Gemäß einem Ausführungsbeispiel kann das Fluidventil ein Leak-Dichtelement aufweisen, das zum fluidischen Niederdruckdichten und zur gesteuerten Leakabfuhr zwischen der ersten Ventilkomponente und der zweiten Ventilkomponente angeordnet ist. Insbesondere kann das Dichtelement ein Dichtring sein. Ein solches Dichtelement kann die fluidische Dichtigkeit zwischen den beiden Ventilkomponenten weiter stärken. Obwohl auch die goldhaltige und/oder platinhaltige Beschichtung aufgrund ihrer intrinsischen Eigenschaften bereits zur Dichtigkeit des mindestens einen Fluidkanals zwischen den beiden Ventilkomponenten beiträgt, kann die Leckagefreiheit auch für Hochdruckanwendungen (wie zum Beispiel bei einer HPLC) durch ein zusätzliches Dichtelement weiter verbessert werden. Ein solches Dichtelement kann zum Beispiel ein Dichtring sein, der in einer Nut von einer der beiden Ventilkomponenten angeordnet werden kann und nach Verbinden (zum Beispiel Verpressen) der beiden Ventilkomponenten fluiddicht gegen die gegenüberliegende Kontaktfläche der anderen Ventilkomponente drückt.

Gemäß einem Ausführungsbeispiel kann das Dichtelement Polytetrafluorethylen (PTFE, Teflon^{®}) oder einen PTFE-EPDM-Verbund (Ethylen-Propylen-Dien) aufweisen oder daraus bestehen. Allerdings sind Dichtelemente aus anderen Materialien (zum Beispiel Perfluor-Elastomere, insbesondere nanoaktiviert) möglich.

Gemäß einem Ausführungsbeispiel kann zumindest eine der ersten Ventilkomponente und der zweiten Ventilkomponente zumindest ein Material aus einer Gruppe aufweisen, die besteht aus einem Metall, einem Kunststoff (insbesondere mit Füllpartikeln oder ohne Füllpartikel), und einer Keramik. Durch die entsprechende Materialwahl können zusätzliche Eigenschaften des Fluidventils, zum Beispiel mechanische und/oder thermische Eigenschaften, eingestellt werden.

Gemäß einem Ausführungsbeispiel können in unterschiedlichen Durchmesserbereichen der ersten Ventilkomponente unterschiedliche fluidische Strukturen vorgesehen sein. Dadurch können auch komplexe fluidische Kopplungsaufgaben in einem kompakten Fluidventil ermöglicht werden.

Gemäß einem Ausführungsbeispiel kann mittels des mindestens einen Fluidkanals zumindest eine Funktion aus einer Gruppe bereitgestellt werden, die besteht aus einer fluidischen Restriktion, einer fluidischen Verzögerungseinrichtung zum Verzögern eines Fluidflusses, einem Zwischenspeichervolumen zum Zwischenspeichern einer vordefinierten Fluidmenge (zum Beispiel im Nanoliter- bis Mikroliterprobenbereich), und einer fluidischen Mischeinrichtung. Eine fluidische Restriktion kann zum Beispiel als eine Engstelle zwischen zwei Fluidanschlüssen vorgesehen sein, indem eine Nut mit einer definierten Breite und Tiefe gebildet wird als die Fluidanschlüsse. Eine fluidische Verzögerungseinrichtung kann zum Beispiel einen verlängerten Fluidkanal (zum Beispiel eine nichtlineare Verbindung) zwischen Fluidanschlüssen darstellen, zum Beispiel eine mäanderförmige oder spiralförmige Kanalausgestaltung. In einem Zwischenspeichervolumen kann zum Beispiel ein Probenabschnitt zeitweise eingesperrt werden oder dort einer fluidischen Reaktorreaktion unterzogen werden. Hierfür kann in dem jeweiligen Fluidkanal eine Maßnahme vorgesehen werden, die den Fluidkanal als Reaktor prädestiniert und/oder ein zeitweises Absperren der zwischengespeicherten oder gepufferten Fluidmenge ermöglicht. Eine fluidische Mischeinrichtung kann zum Beispiel durch mehrere von einem Fluidanschluss abzweigende Kanäle unterschiedlicher Länge und/oder unterschiedlicher Durchmesser ausgestaltet sein, so dass durch die unterschiedlichen Kanäle fließende Fluidkomponenten unterschiedliche Fließgeschwindigkeiten haben und dadurch ein hierin fluidisch eingekoppeltes Fluid im Ergebnis gemischt wird. Allerdings sind weitere oder andere Funktionen möglich.

Gemäß einem Ausführungsbeispiel kann die Beschichtung mittels eines nichtselektiven oder unspezifischen Abscheideprozesses auf der jeweiligen Ventilkomponente ausgebildet werden. Mit anderen Worten braucht gemäß der beschriebenen Ausgestaltung nicht Sorge dafür getragen werden, dass die Beschichtung der jeweiligen Ventilkomponente ausschließlich an der Kontaktfläche ausgebildet wird. Dies vereinfacht das Herstellungsverfahren des Fluidventils erheblich, weil Maskierungsprozesse und dergleichen (die zum selektiven Ausbilden der Beschichtung nur an ausgewählten Stellen nötig wären) nicht anfallen. Zusätzlich hat das Beschichten von anderen Oberflächenbereichen der jeweiligen Ventilkomponente (zum Beispiel Fluidstrukturen wie Nuten, Fluidanschlüsse und/oder Durchgänge, welche zum Ausbilden des mindestens einen Fluidkanals beitragen) den Vorteil, dass dann auch diese Oberflächen mit einem bioinerten oder biokompatiblen Schutz versehen sind. Bei der Ausbildung der Beschichtung an der Oberfläche hat es sich also als herstellungstechnisch besonders einfach erwiesen, eine gesamte freiliegende Oberfläche der jeweiligen Ventilkomponente (oder einer Teilkomponente davon) mit der Beschichtung zu versehen. Dies hängt damit zusammen, dass solche Beschichtungen (zum Beispiel DLC) mit Abscheideverfahren (beispielsweise chemische Gasphasenabscheidung (CVD), PACVD) ausgebildet werden können, bei denen die Beschichtung unspezifisch auf einer gesamten Oberfläche abgeschieden wird. Bei Gold ist dies oft ein galvanischer Prozess der gesamten freiliegenden Oberfläche einer jeweiligen Ventilkomponente. Diese herstellungstechnisch besonders einfache Beschichtung der gesamten freiliegenden Oberfläche einer jeweiligen Ventilkomponente bewirkt simultan, dass die gesamten technischen Vorteile der Beschichtung (Schmierung, Ausgleichsfähigkeit, Bioinertheit/Biokompatibilität, Bondfähigkeit, etc.) in unterschiedlichen Oberflächenbereichen einer jeweiligen Ventilkomponente zum Tragen kommen. Ein Zusatzaufwand (Maskierung, etc.) zum Beschränken der Beschichtung auf einzelne Oberflächenbereiche kann zusätzlich eingespart werden.

Gemäß einem Ausführungsbeispiel kann zumindest ein Teil von mindestens einer Fluidstruktur der ersten Ventilkomponente (insbesondere eine Rotoreinrichtung) in Axialrichtung gegenüber den Kontaktflächen versetzt sein, so dass in zumindest einem Schaltzustand des Fluidventils dieser Teil und zumindest ein anderer Teil mindestens einer Fluidstruktur der ersten Ventilkomponente und/oder der zweiten Ventilkomponente (insbesondere eine Statoreinrichtung) bei Blick entlang der Axialrichtung zumindest teilweise überlappen. Gemäß einem solchen Ausführungsbeispiel können unterschiedliche Teile von Fluidstrukturen einer Rotoreinrichtung bzw. einer Statoreinrichtung eines Fluidventils in axialer Blickrichtung bzw. Projektion miteinander überlappend und axial in unterschiedlichen Ebenen ausgebildet werden, ohne zwingend fluidisch miteinander gekoppelt zu sein oder während eines Schaltvorgangs unerwünscht miteinander vorübergehend gekoppelt zu werden. Dies kann dadurch bewirkt werden, dass die unterschiedlichen Teile der Fluidstrukturen in unterschiedlichen Axialebenen des Fluidventils, aber dennoch zumindest abschnittsweise miteinander in Blickrichtung fluchtend geführt werden. Auf diese Weise ist es möglich, ein kompaktes Fluidventil bereitzustellen, mit dem auch komplexe fluidische Strukturen flexibel bewerkstelligt werden können. Aufgrund der Verlagerung unterschiedlicher Teile der Fluidstrukturen in unterschiedliche Ebenen können sich diese bei Blick in oder Projektion auf die Rotationsrichtung statisch (zum Beispiel wenn die Teile alle in der Rotoreinrichtung integriert sind) und/oder dynamisch (zum Beispiel während Rotierens der Rotationseinrichtung gegenüber einer ortsfesten Statoreinrichtung, wenn die Teile teils in der Rotoreinrichtung und teils in der Statoreinrichtung integriert sind) schneiden oder überkreuzen, ohne dass Fluid unerwünscht von dem einen Teil der Fluidstruktur(en) in den anderen Teil der Fluidstruktur(en) fließt.

Gemäß einem Ausführungsbeispiel können in dem zumindest einen Rotationszustand, in dem die zumindest teilweise Überlappung auftritt, der zumindest eine Teil und der zumindest eine andere Teil voneinander fluidisch entkoppelt sein. Unterschiedliche Fluide können dadurch in zumindest dem einen genannten Rotationszustand voneinander unabhängig durch den Teil und durch den anderen Teil fließen, ohne miteinander unerwünscht in Wechselwirkung zu geraten. Gemäß einem anderen Ausführungsbeispiel können in dem Rotationszustand, in dem die zumindest teilweise Überlappung auftritt und/oder in einem anderen Rotationszustand, der zumindest eine Teil und der zumindest eine andere Teil miteinander gezielt fluidisch gekoppelt sein.

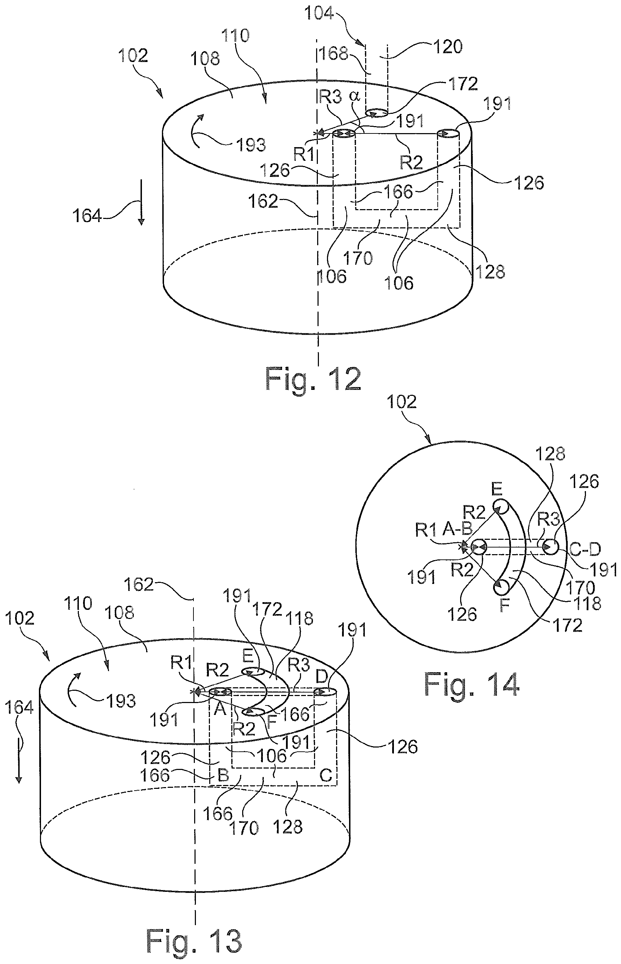

Gemäß einem Ausführungsbeispiel kann der zumindest eine andere Teil durch mindestens einen Fluidanschluss der Statoreinrichtung gebildet sein (siehe zum Beispiel Figur 12). Ein räumlich statischer Fluidanschluss der Statoreinrichtung kann dadurch an einer beliebigen Position, insbesondere auch bei mehreren Umlaufradien der genannten Strukturen, vorgesehen werden, ohne Gefahr zu laufen, mit einer im Inneren der Rotoreinrichtung platzierten Nut, Kanalsysteme oder dergleichen während des Schaltens des Fluidventils zeitweise in unerwünschte Wechselwirkung zu geraten.

Gemäß einem Ausführungsbeispiel kann der zumindest eine andere Teil durch mehrere Fluidanschlüsse der Statoreinrichtung gebildet sein, die zumindest auf zwei unterschiedlichen Radien der Statoreinrichtung, bezogen auf die Rotationsachse, angeordnet sind. Durch die Möglichkeit, mehrere Fluidanschlüsse bei unterschiedlichen Radien vorzusehen, können auch komplexe fluidische Aufgaben durch ein kompaktes Fluidventil erfüllt werden.

Gemäß einem Ausführungsbeispiel kann sich der zumindest eine Teil auf einem ersten Radius bis zu einem zweiten Radius der Rotoreinrichtung erstrecken (insbesondere in radialer Richtung) und kann der zumindest eine andere Teil auf einem dritten Radius angeordnet sein, der größer als der erste Radius und kleiner als der zweite Radius ist. Die Anordnung der Strukturen auf den entsprechenden Radien kann auf die Rotationsachse bezogen sein. Beim Schalten des Fluidventils kann dann zum Beispiel der als Fluidanschluss ausgebildete andere Teil über die Fluidstruktur zwischen dem ersten Radius und dem zweiten Radius gleiten, ohne mit diesem in fluidische Wechselwirkung zu geraten.

Gemäß einem anderen Ausführungsbeispiel kann auch der zumindest eine andere Teil der mindestens einen Fluidstruktur der Rotoreinrichtung zugehörig sein und gegenüber dem zumindest einen Teil der mindestens einen Fluidstruktur der Rotoreinrichtung in auf die Rotationsachse bezogener Axialrichtung versetzt sein (siehe zum Beispiel Figur 13). Gemäß dieser Ausgestaltung ist es möglich, in der Rotoreinrichtung auf unterschiedlichen Ebenen unterschiedliche Fluidstrukturen vorzusehen, die unabhängig voneinander betrieben werden können. Diese können sich in Draufsicht zum Beispiel kreuzen.

Gemäß einem Ausführungsbeispiel kann der zumindest eine andere Teil der mindestens einen Fluidstruktur an der Kontaktfläche der Rotoreinrichtung angeordnet sein, mithin direkt an der Schnittstelle zwischen Rotoreinrichtung und Statoreinrichtung. Insbesondere kann der zumindest eine andere Teil der mindestens einen Fluidstruktur eine oberflächliche Nut der Rotoreinrichtung an deren Kontaktfläche sein. An der Kontaktfläche kann mit besonders geringem Herstellungsaufwand der andere Teil der entsprechenden Fluidstruktur hergestellt werden, zum Beispiel durch spanendes Entfernen von Material (beispielsweise durch Fräsen) von der Oberfläche unter Ausbildung der Nut.

Gemäß einem Ausführungsbeispiel kann die mindestens eine Fluidstruktur der Rotoreinrichtung mindestens einen Durchgang (zum Beispiel ausgebildet als vertikales Sackloch oder Durchgangsloch) durch die Rotoreinrichtung von der Kontaktfläche der Rotoreinrichtung bis zu dem (gegenüber der Kontaktfläche räumlich versetzten) zumindest einen Teil aufweisen. Ein solcher Durchgang kann zum Beispiel durch Bohren (oder durch Ätzen oder durch das PEM-Verfahren) einer vertikalen Bohrung in oder durch die Rotoreinrichtung oder ein Rotorelement davon mit geringem Aufwand ausgebildet werden. Auch ein schräges Bohren ist möglich. Durch einen oder mehrere solche Durchgänge kann mit einfachen Mitteln eine fluidische Verbindung mit einer axial gegenüber der Kontaktfläche versetzten Fluidstruktur der Rotoreinrichtung hergestellt werden.

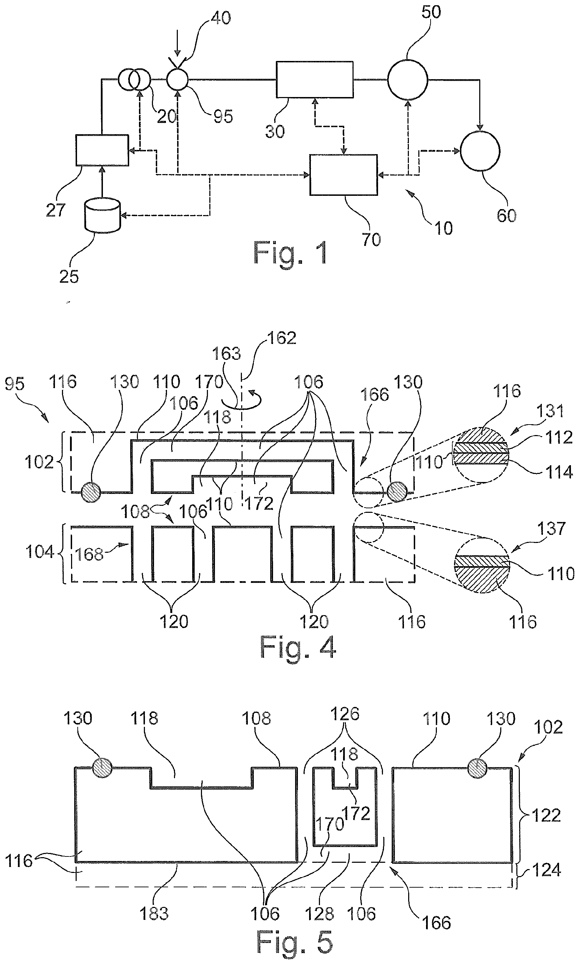

Gemäß einem Ausführungsbeispiel können der mindestens eine Durchgang und der zumindest eine Teil einen fluidischen Bypass für den zumindest einen anderen Teil bilden (siehe zum Beispiel Figur 4 oder Figur 5). Anschaulich können zwei Durchgänge und ein nutartiger bzw. kapillarartiger anderer Teil eine Untertunnelung einer Fluidstruktur an der Kontaktfläche oder in einer anderen Ebene der Rotoreinrichtung bewirken.

Gemäß einem Ausführungsbeispiel können zwei Durchgänge und ein diese Durchgänge verbindender Teil vorgesehen werden, die gemeinsam im Querschnitt eine im Wesentlichen U-förmige Struktur bilden (siehe zum Beispiel Figur 4 oder Figur 5). Eine solche U-Form kann durch zwei vertikale Durchgänge und einen horizontalen Verbindungsteil zwischen den beiden vertikalen Durchgängen gebildet werden, um eine andere Fluidstruktur zu untertunneln.

Gemäß einem Ausführungsbeispiel kann der zumindest eine Teil durch eine Nut in einem ersten Rotorelement der Rotoreinrichtung gebildet sein, welche Nut durch ein zweites Rotorelement abgedeckt ist (siehe zum Beispiel Figur 5). Das Fräsen einer Nut ist mit geringem Herstellungsaufwand möglich. Wird ein erstes Rotorelement mit einer derart hergestellten Nut durch ein zum Beispiel durchgehendes zweites Rotorelement abgedeckt, kann eine kapillarartige Struktur gebildet werden, die umfänglich abgeschlossen bzw. begrenzt ist.

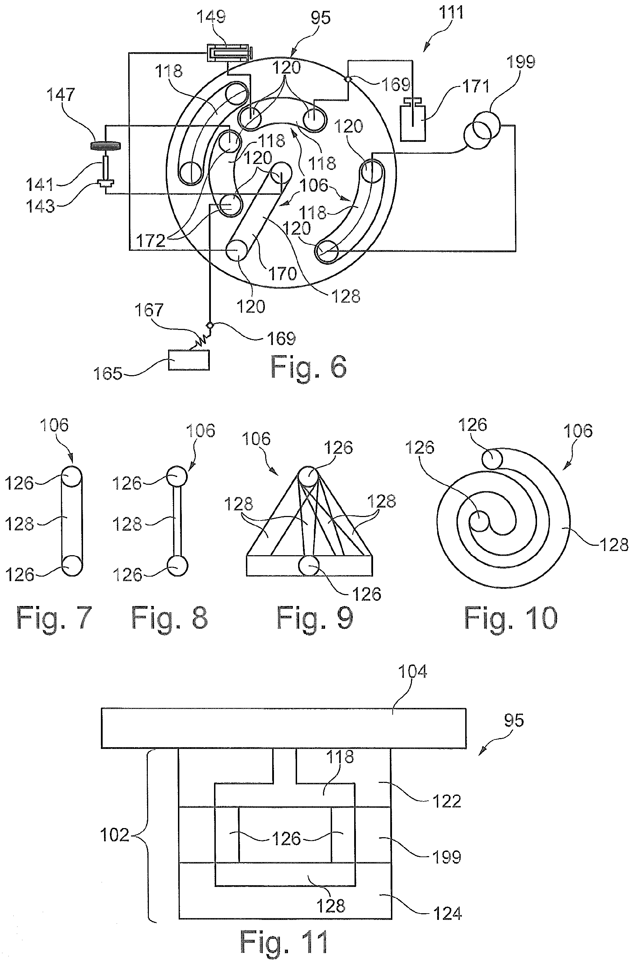

Gemäß einem Ausführungsbeispiel kann sich der zumindest eine Teil in Radialrichtung der Rotoreinrichtung erstrecken (siehe zum Beispiel Figur 6). Dadurch kann ein fluidischer Pfad mit Vorteil kurz gehalten werden, ohne die Möglichkeit einzubüßen, in einem radialen Zwischenbereich eine oder mehrere weitere fluidische Strukturen (in anderen Ebenen) der Rotoreinrichtung auszubilden.

Gemäß einem Ausführungsbeispiel kann die Trenneinrichtung als chromatographische Trenneinrichtung, insbesondere als Chromatographietrennsäule, ausgebildet sein. Bei einer chromatographischen Trennung kann die Chromatographietrennsäule mit einem Adsorptionsmedium versehen sein. An diesem kann die fluidische Probe aufgehalten werden und erst nachfolgend mit hinreichend Laufmittel (isokratisch) oder bei Anwesenheit einer spezifischen Lösungsmittelzusammensetzung (Gradient) fraktionsweise wieder abgelöst werden, womit die Trennung der Probe in ihre Fraktionen bewerkstelligt wird.

Das Probenseparationsgerät kann ein mikrofluidisches Messgerät, ein Life Science-Gerät, ein Flüssigchromatographiegerät, eine HPLC (High Performance Liquid Chromatography), eine UHPLC-Anlage, ein SFC-(superkritische Flüssigchromatographie) Gerät, ein Gaschromatographiegerät, ein Elektrochromatographiegerät und/oder ein Gelelektrophoresegerät sein. Allerdings sind viele andere Anwendungen möglich.

Die Fluidpumpe kann zum Beispiel dazu eingerichtet sein, die mobile Phase mit einem hohen Druck, zum Beispiel einige 100 bar bis hin zu 1000 bar und mehr, durch das System hindurch zu befördern.

Das Probentrenngerät kann einen Probeninjektor zum Einbringen der Probe in den fluidischen Trennpfad aufweisen. Ein solcher Probeninjektor kann eine mit einem Sitz koppelbare Injektionsnadel in einem entsprechenden Flüssigkeitspfad aufweisen, wobei die Nadel aus diesem Sitz herausgefahren werden kann, um Probe aufzunehmen, wobei nach dem Wiedereinführen der Nadel in den Sitz die Probe sich in einem Fluidpfad befindet, der, zum Beispiel durch das Schalten eines Ventils, in den Trennpfad des Systems hineingeschaltet werden kann, was zum Einbringen der Probe in den fluidischen Trennpfad führt.

Das Probentrenngerät kann einen Fraktionssammler zum Sammeln der getrennten Komponenten aufweisen. Ein solcher Fraktionssammler kann die verschiedenen Komponenten zum Beispiel in verschiedene Flüssigkeitsbehälter führen. Die analysierte Probe kann aber auch einem Abflussbehälter zugeführt werden.

Vorzugsweise kann das Probentrenngerät einen Detektor zur Detektion der getrennten Komponenten aufweisen. Ein solcher Detektor kann ein Signal erzeugen, welches beobachtet und/oder aufgezeichnet werden kann, und welches für die Anwesenheit und Menge der Probenkomponenten in dem durch das System fließenden Fluid indikativ ist.

### KURZE BESCHREIBUNG DER FIGUREN

Andere Ziele und viele der begleitenden Vorteile von Ausführungsbeispielen der vorliegenden Erfindung werden leicht wahrnehmbar werden und besser verständlich werden unter Bezugnahme auf die folgende detailliertere Beschreibung von Ausführungsbeispielen in Zusammenhang mit den beigefügten Zeichnungen. Merkmale, die im Wesentlichen oder funktionell gleich oder ähnlich sind, werden mit denselben Bezugszeichen versehen.
Figur 1 zeigt ein HPLC-System gemäß einem exemplarischen Ausführungsbeispiel der Erfindung.
Figur 2 zeigt eine dreidimensionale Explosionsdarstellung eines Fluidventils gemäß einem exemplarischen Ausführungsbeispiel der Erfindung.
Figur 3 zeigt eine dreidimensionale Explosionsdarstellung einer Rotoreinrichtung des Fluidventils gemäß Figur 2.
Figur 4 zeigt eine Querschnittsansicht eines Stators bzw. Rotors eines Fluidventils gemäß einem exemplarischen Ausführungsbeispiel der Erfindung.
Figur 5 zeigt eine Querschnittsansicht einer Rotoreinrichtung eines Fluidventils gemäß einem exemplarischen Ausführungsbeispiel der Erfindung.
Figur 6 zeigt eine Fluidverarbeitungsvorrichtung mit einem Fluidventil gemäß einem exemplarischen Ausführungsbeispiel der Erfindung.
Figur 7 bis Figur 10 zeigen als funktionelle Fluidbauteile ausgebildete Nuten einer Rotoreinrichtung eines Fluidventils gemäß einem exemplarischen Ausführungsbeispiel der Erfindung.
Figur 11 zeigt eine Querschnittsansicht eines dreischichtigen Fluidventils gemäß einem exemplarischen Ausführungsbeispiel der Erfindung.
Figur 12 zeigt eine dreidimensionale Ansicht einer Rotoreinrichtung und eines Teils einer Statoreinrichtung eines Fluidventils gemäß einem exemplarischen Ausführungsbeispiel der Erfindung.
Figur 13 zeigt eine dreidimensionale Ansicht einer Rotoreinrichtung eines Fluidventils gemäß einem anderen exemplarischen Ausführungsbeispiel der Erfindung.
Figur 14 zeigt eine Draufsicht der Rotoreinrichtung gemäß Figur 13.

Die Darstellung in den Zeichnungen ist schematisch.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem ersten Aspekt eines Ausführungsbeispiels der Erfindung wird zumindest ein Teil einer Oberfläche (insbesondere an einer Kontaktfläche zwischen zusammenwirkenden Ventilkomponenten, an einer Bondfläche zwischen Einzelkörpern einer Ventilkomponente, an einer Fluidstruktur einer Ventilkomponente, etc.) einer Ventilkomponente (insbesondere eine Statoreinrichtung oder eine Rotoreinrichtung) mit einer goldhaltigen und/oder platinhaltigen Beschichtung versehen. Dies führt zu einer Schmierung (insbesondere Au-Co-Schmierung bei Hartgold) sowie Ausgleichsfähigkeit an der Kontaktfläche, einer Biokompatibilität der Fluidstrukturen, einer mechanischen Robustheit des Fluidventils und einer Bondfähigkeit von Einzelelementen einer Ventilkomponente.

Gemäß einem anderen Aspekt eines Ausführungsbeispiels der Erfindung werden Fluidstrukturen einer Ventilkomponente (insbesondere einer Rotoreinrichtung oder einer Statoreinrichtung) in mehreren Ebenen (insbesondere an einer Kontaktfläche und im Inneren) einer Ventilkomponente geführt. Dadurch können die Dichte von Fluidstrukturen in einem Fluidventil erhöht, die Komplexität und die Zahl der Funktionen erhöht und somit die Kompaktheit des Systems verbessert werden. Gleichzeitig führt dies zu einer Verkürzung der Fluidwege und somit zu einem geringen Totvolumen des Fluidventils.

Gemäß der Erfindung ist ein Fluidventil bereitgestellt, das als ein Rotorventil bzw. Scherventil ausgebildet ist. Weiter vorzugsweise ist ein Oberflächenabschnitt, insbesondere der Rotorkomponente, eines solchen Rotorventils mit einer Goldplattierung versehen. Wenn die goldhaltige Beschichtung aus Hartgold ausgebildet ist, kann diese eine Vickershärte von 160 HV ± 20 HV haben. Ein anderer Oberflächenbereich insbesondere der Statorkomponente eines solchen Fluidventils kann mit einer DLC (Diamond Like Carbon)-Beschichtung versehen sein. Vorzugsweise ist ein Fluidventil in folgenden Konfigurationen geschaffen: Teflon^{®} oder MoldFlon^{®} auf DLC (bioinert); PEEK auf DLC (bioinert); Gold auf DLC oder Gold auf Gold (biokompatibel).

Herkömmliche Scherventile für HPLC-Anwendungen sind üblicherweise aus drei Kernkomponenten aufgebaut: Ein hartes Statorteil, ein zumeist weicheres Rotorteil sowie eine oder mehrere Federn, insbesondere Federscheiben (Krafteinheit). Besonders bei hohen Fluiddrücken (das heißt hohen Anpresskräften) führen diese Technologien unter anderem aufgrund nicht optimaler tribologischer Bedingungen (Paarungen), entweder hinsichtlich der weichen oder (zum Beispiel bei kohlefasergefülltem PEEK auf DLC) auch der härteren Komponente zu Einschränkungen hinsichtlich Verlässlichkeit und Dichtigkeit, so dass diese Komponenten häufiger ausgetauscht werden müssen. Diese Technologien machen es herkömmlich notwendig, insbesondere die weiche Komponente aufgrund starker Abnutzung häufig auszutauschen, da sich dadurch Einschränkungen hinsichtlich Verlässlichkeit und Dichtigkeit ergeben können.

Im Unterschied hierzu ist gemäß einem exemplarischen Ausführungsbeispiel der Erfindung ein Fluidventil mit hoher Lebensdauer und niedrigem Verschleiß bereitgestellt. Insbesondere sind ein Scherventilrotor und ein Scherventilstator geschaffen, bei denen eine Beschichtungsprozedur und eine besondere Materialwahl vorgenommen werden können. Dadurch ist es möglich, Gold- und/oder und DLC-Beschichtungen auf Kontaktflächen einer solchen Rotorkomponente bzw. Statorkomponente vorzusehen, und durch eine solche Beschichtung ein Fluidventil mit hoher Lebensdauer zu schaffen. Insbesondere wird die Beschichtung einer Kontaktfläche einer der Ventilkomponenten mit einer goldhaltigen und/oder platinhaltigen Schicht vorgesehen, um eine hohe Zuverlässigkeit hinsichtlich Druckstabilität bereitzustellen. Weiterhin schafft eine solche Beschichtung technische Vorteile hinsichtlich dem Bondingverhalten, der Stabilität über eine hohe Lebensdauer hinweg und der chemischen Robustheit bzw. Bioinertheit oder Biokompatibilität, wie sie insbesondere für Probentrennanwendungen hoch vorteilhaft ist.

Bei einer Ausgestaltung der Beschichtung als Doppelschicht kann eine innere Schicht (zum Beispiel Vorgold) zum Beispiel eine Dicke in einem Bereich zwischen 0,1 µm und 5 µm haben, insbesondere zwischen 0,15 µm und 0,5 µm. Eine äußere Schicht (zum Beispiel Hartgold) kann zum Beispiel eine Dicke in einem Bereich zwischen 5 µm und 50 µm, insbesondere in einem Bereich zwischen 7 µm und 10 µm, haben. Die erstgenannte Schicht kann eine Reingoldschicht sein, wohingegen die zweitgenannte Schicht eine Hartgoldschicht sein kann.

Wenn beide einander gegenüberliegenden Kontaktflächen der beiden Ventilkomponenten eine Beschichtung aufweisen, ist das Vorsehen beider Kontaktflächen mit einer goldhaltigen und/oder platinhaltigen Beschichtung vorteilhaft. Eine alternative vorteilhafte Konfiguration ist das Vorsehen einer goldhaltigen und/oder platinhaltigen Schicht auf einer der Kontaktflächen und das Beschichten mit einer Hartbeschichtung, zum Beispiel aus Diamant oder DLC, auf der anderen Ventilkomponente.

Eine erste Ventilkomponente, die insbesondere als Rotorkomponente ausgebildet sein kann, kann zum Reduzieren von Verschleiß und zum Bereitstellen einer hohen Fluiddichtigkeit, selbst unter Hochdruck, ausgebildet sein. Eine solche Ventilkomponente kann auch mit Lösungsmitteln kompatibel sein, wie sie bei der Flüssigchromatographie zum Einsatz kommen. Eine bioinerte bzw. biokompatible Eigenschaft einer solchen Ventilkomponente ist ebenfalls von Vorteil. Eine derartige Ventilkomponente kann auch eine hohe Lebensdauer eines Dichtelements bewirken. Im Falle eines Defekts kann eine solche Ventilkomponente auch eine angemessene Abführung von austretendem Fluid ermöglichen.

Hinsichtlich der zweiten Ventilkomponente, die vorzugsweise als Statorkomponente ausgebildet ist, erlaubt die beschriebene Architektur das Vorsehen von hochflexiblen Fluidanschlüssen für Kapillaren oder dergleichen, sowie das Vorsehen von Rückschlagventilen, helikalen Windungen, etc.

Das Ausbilden einer Ventilkomponente, die vorzugsweise als Rotorkomponente realisiert wird, kann dadurch erfolgen, dass zwei (oder mehr) Rotorelemente zunächst als separate Körper hergestellt werden. Ein erstes Rotorelement kann mit einer Nut auf einer vorderseitigen Hauptfläche und mit einer Nut auf einer rückseitigen Hauptfläche ausgebildet sein. Dieses Rotorelement kann außerdem ein oder mehrere Löcher in Form von Durchgängen oder Durchgangsbohrungen aufweisen, mit denen die vordere Hauptfläche mit der hinteren Hauptfläche fluidisch gekoppelt wird. Das andere Rotorelement kann zum Bedecken und Abdichten der hinteren Hauptfläche des ersten Rotorelements mittels Bondens ausgebildet sein. Es ist möglich, die Oberflächen von metallischen Rotorelementen mit Gold oder einem goldhaltigen Material zu beschichten. Die beiden Rotorelemente (zum Beispiel Metallteile) der Rotoreinrichtung können dann aneinander gebondet werden, um eine einstückige Rotoreinrichtung mit vergrabener Kapillare (gebildet durch die abgedeckte Nut) zu erhalten. Das Bonden der beiden Rotorelemente aneinander kann insbesondere mittels Ultraschall- und/oder Thermokompressionsbondens durchgeführt werden. Beim Thermobonden werden die (vorzugsweise zuvor oberflächengereinigten und/oder oberflächenaktivierten) Rotorelemente bei erhöhter Temperatur bzw. erhöhtem Druck (gegebenenfalls Eintrag durch Ultraschallenergie) aufeinandergedrückt und verbinden sich dadurch zu einer einstückigen Struktur. Beim Ultraschallbonden kann das Ausbilden einer einstückigen Struktur durch das Zuführen von Ultraschall gefördert werden. Zudem ist es möglich, ein Dichtelement, zum Beispiel einen PTFE-Dichtring, an der Rotorkomponente anzubringen.

Jedes der beiden Rotorelemente kann aus einem der Materialien aus der folgenden Liste hergestellt werden: Stahl mit Goldbeschichtung; Polyetheretherketon (PEEK) und/oder kohlefasergefülltes PEEK (thermisch bondbar); Keramik (beidseitig bondbar); Teflonvollmaterial; Teflon^{®} oder MoldFlon^{®} mit Perfluoralkoxy-Polymer (PFA) (beidseitig bondbar), optional gefüllt oder ungefüllt (bondbar). Die Füllung kann mit Füllpartikeln erfolgen, welche die Verschleißfestigkeit und/oder die Druckstabilität der jeweiligen Ventilkomponente bzw. des jeweiligen Rotorelements erhöhen.

Das Ausbilden der vorzugsweise als Statorkomponente ausgebildeten zweiten Ventilkomponente kann mittels Beschichtens der inneren bzw. freiliegenden Oberflächen mit DLC (Diamond-Like Carbon) oder einem anderen harten Material hergestellt werden. Alternativ kann auch diese Oberfläche mit einer goldhaltigen und/oder platinhaltigen Beschichtung versehen werden, wie jene der Rotorkomponente.

Mit einem solchen Fluidventil ist eine weitreichende Kompatibilität mit unterschiedlichsten Lösungsmitteln (zum Beispiel organischen Lösungsmitteln wie Ethanol oder anorganischen Lösungsmitteln) erreicht. Ferner kann ein unerwünschtes Probenverschleppen zwischen nacheinander durchgeführten Analysen, Messungen oder sonstigen Fluidverarbeitungsschritten mit einer solchen Ventilarchitektur vermieden werden. Es kann ein Fluidventil mit einer hohen Lebensdauer geschaffen werden. Außerdem ist eine potenzielle Gefahr eines Verlusts von fluidischem Probenmaterial mit der beschriebenen Ventilkonfiguration gemindert. Ein weiterer Vorteil dieser Architektur besteht darin, dass aufgrund des Vorsehens eines Dichtelements um einen Hochdruckdichtbereich herum im Falle einer Leckage eine Abfuhr austretenden Fluids durch einen Kanal in der Statoreinrichtung präzise definiert und kanalisiert werden kann.

Das Vorsehen der Rotoreinrichtung aus zwei Rotorelementen, von denen eine auf gegenüberliegenden Hauptflächen Nuten und einen diese verbindenden Durchgang hat, hat zusätzliche Vorteile. Auf diese Weise können, auf einer bezogen auf die Statorkomponente rückseitigen Hauptfläche des entsprechenden Rotorelements, fluidische Funktionen wie beispielsweise Restriktionen, Verzögerungsvolumina, feste Volumina für eine Injektion, oder überlagerte Funktionen auf unterschiedlichen Rotorradien durch ein brückenartiges Entkoppeln unterschiedlicher Fluidkanäle realisiert werden. Auf diese Weise können komplexe fluidische Strukturen mit geringen Dimensionen bereitgestellt werden. Es ist möglich, mit Fluidverbindungen bei unterschiedlichen Rotordurchmessern zu arbeiten, ohne Einschränkungen hinsichtlich der Schaltperformance zu haben. Der Grad an Freiheit bei der Entwicklung von Rotordichtungen ist hoch.

**Figur** 1 zeigt den prinzipiellen Aufbau eines HPLC-Systems als Beispiel für ein Probentrenngerät 10, wie es zum Beispiel zur Flüssigkeitschromatographie verwendet werden kann. Eine Fluidpumpe 20 als Fluidantriebseinrichtung, die mit Lösungsmitteln aus einer Versorgungseinheit 25 versorgt wird, treibt eine mobile Phase durch eine Trenneinrichtung 30 (wie zum Beispiel eine chromatographische Säule), die eine stationäre Phase beinhaltet. Ein Entgaser 27 kann die Lösungsmittel entgasen, bevor diese der Fluidpumpe 20 zugeführt werden. Eine Probenaufgabeeinheit 40 mit einem Schaltventil oder Fluidventil 95 ist zwischen der Fluidpumpe 20 und der Trenneinrichtung 30 angeordnet, um eine Probenflüssigkeit in den fluidischen Trennpfad einzubringen. Die stationäre Phase der Trenneinrichtung 30 ist dazu vorgesehen, Komponenten der Probe zu separieren. Ein Detektor, siehe Flusszelle 50, detektiert separierte Komponenten der Probe, und ein zwischengeschalteter Fraktionierer kann dazu vorgesehen werden, separierte Komponenten der Probe in dafür vorgesehene Behälter auszugeben. Nicht mehr benötigte Flüssigkeiten können in einen Abflussbehälter 60 ausgegeben werden.

Eine Steuereinheit 70 steuert die einzelnen Komponenten 20, 25, 27, 30, 40, 50, 60, 95 des Probentrenngeräts 10. Ausgestaltungen des Fluidventils 95 gemäß exemplarischen Ausführungsbeispielen der Erfindung werden bezugnehmend auf die weiteren Figuren nachfolgend beschrieben.

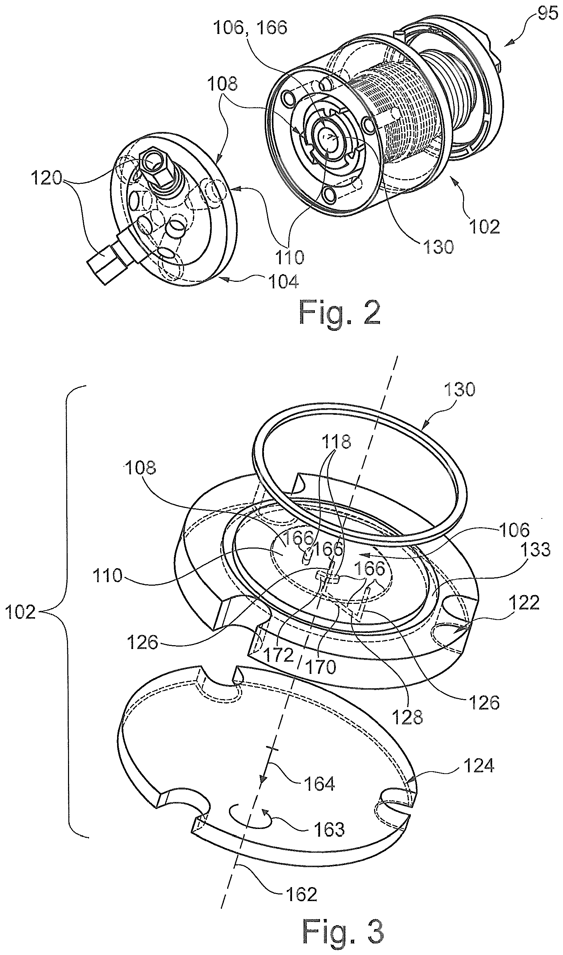

**Figur** 2 zeigt eine dreidimensionale Ansicht eines Fluidventils 95 gemäß einem exemplarischen Ausführungsbeispiel der Erfindung in Explosionsdarstellung. **Figur** 3 zeigt eine dreidimensionale Ansicht einer Rotoreinrichtung 102 des Fluidventils 95 gemäß Figur 2 in einer Explosionsdarstellung.

Das Fluidventil 95 eignet sich zum Beispiel zur Verwendung in einem Probentrenngerät 10, wie dem in Figur 1 dargestellten Flüssigchromatographiegerät. Das Fluidventil 95 weist eine erste Ventilkomponente auf, die als Rotoreinrichtung 102 ausgebildet ist und dessen Einzelteile in Figur 3 näher dargestellt sind. Das Fluidventil 95 weist ferner eine zweite Ventilkomponente auf, die als Statoreinrichtung 104 ausgebildet ist und mit der Rotoreinrichtung 102 zusammenwirkt. Die rotierbare Rotoreinrichtung 102 und die ortsfeste Statoreinrichtung 104 sind durch eine Rotationsbewegung der Rotoreinrichtung 102 relativ zueinander beweglich und derart eingerichtet, dass zwischen diesen ein oder mehrere schaltbare Fluidkanäle 106 gebildet sind (nur teilweise gezeigt in Figur 2). Zumindest ein Teil einer Kontaktfläche 108 der Rotoreinrichtung 102 und/oder zumindest ein Teil einer Kontaktfläche 108 der Statoreinrichtung 104 ist oder sind vorzugsweise mit einer goldhaltigen Beschichtung 110 versehen. Die Kontaktflächen 108 der Rotoreinrichtung 102 und der Statoreinrichtung 104 liegen einander gegenüber und können einander im Betrieb des Fluidventils 95 hochdruckfluiddicht berühren. Genauer gesagt, kann die goldhaltige Beschichtung 110 aus Hartgold gebildet sein, das Kobalt in einem Bereich zwischen 0,2 Gewichtprozent und 0,3 Gewichtprozent, ungefähr 0,7 Gewichtprozent Kohlenstoff und ansonsten im Wesentlichen nur Gold (etwa 99 Gewichtprozent) aufweist. Besonders bevorzugt ist es, wenn die Beschichtung 110 der Rotoreinrichtung 102 Gold aufweist und die Beschichtung 110 der Statoreinrichtung 104 DLC (Diamond-Like-Carbon) aufweist. Dies bewirkt eine gute Schmierung an der Grenzfläche (d.h. den Kontaktflächen 108) zwischen den Ventilkomponenten 102, 104 als tribologisches Paar und folglich einen reibungsarmen Betrieb des Fluidventils 95. Bei geringen Fehlausrichtungen zwischen den beiden Ventilkomponenten 102, 104 sorgt die Beschichtung 110 für eine gewisse Ausgleichsfähigkeit und verlängert dadurch weiter die Lebensdauer des Fluidventils 95. Außerdem sorgt die Härte der Beschichtung 110 aus DLC für einen geringen Abrieb und einen folglich niedrigen Verschleiß. Im Bereich der Fluidkanäle 106 schafft die Beschichtung 110 eine zumindest biokompatible Oberfläche, die aggressiven Lösungsmitteln und biologischen Proben ohne Korrosion oder die unerwünschte Erzeugung nennenswerter chemischer Wechselwirkungsprodukte standhält. Wenn die beiden in Figur 3 dargestellten Rotorelemente 122, 124 mittels Bondens zu einer einstückigen Rotoreinrichtung 102 aneinandergefügt werden, fördert die Beschichtung 110 zwischen den Rotorelementen 122, 124 die Festigkeit an deren Grenzflächen. Um diese Vorteile besonders stark zur Geltung kommen zu lassen und aus Gründen einer einfachen Herstellbarkeit der Beschichtungen 110 durch ein nichtselektives Abscheiden kann die Beschichtung 110 mit Vorteil auf einer gesamten Oberfläche der Rotoreinrichtung 102 bzw. der Statoreinrichtung 104 ausgebildet sein.

Durch Bewegen der Rotoreinrichtung 102 gegenüber der Statoreinrichtung 104 können unterschiedliche Fluidkopplungszustände bzw. Fluidentkopplungszustände des mindestens einen Fluidkanals 106 eingestellt werden. Zum Beispiel können Fluidstrukturen 166 (wie zum Beispiel Nuten, Durchgänge, geschlossene Fluidleitungen, etc.) der Rotoreinrichtung 102 und korrespondierende Fluidstrukturen 168 (nicht gezeigt in Figur 2, zum Beispiel Nuten, geschlossene Fluidleitungen, Fluidanschlüsse, etc.) der Statoreinrichtung 104 in unterschiedlichen Schaltzuständen fluidisch miteinander gekoppelt oder voneinander fluidisch entkoppelt werden. Wie in Figur 2 gezeigt, weist die Statoreinrichtung 104 Fluidanschlüsse 120 (auch als Ports bezeichnet) auf, an die in Figur 2 nicht dargestellte Fluidbauteile (zum Beispiel Injektor 40, Fluidpumpe 20, Trenneinrichtung 30, vgl. Figur 1) fluidisch angeschlossen werden können. Dies kann zum Beispiel mittels Kapillarverbindungen und eines passenden Fittings bewerkstelligt werden (nicht gezeigt). Gemäß Figur 2 ist ferner ein ringförmiges Dichtelement 130 in eine korrespondierende Ringnut 133 der Rotoreinrichtung 102 eingelegt.

Wie in Figur 3 gezeigt, kann der rotorseitige Teil des mindestens einen Fluidkanals 106 durch die Fluidstrukturen 166 gebildet sein, die in dem ersten Rotorelement 122 gebildet sind und von denen ein Teil durch das zweite Rotorelement 124 durch Abdecken begrenzt wird. Hierfür kann das erste Rotorelement 122 an seiner gemäß Figur 3 unteren Hauptoberfläche mit dem zweiten Rotorelement 124 unter Ausbildung der einstückigen Rotoreinrichtung 102 gebondet und von diesem dadurch abgedeckt werden. Die Fluidstrukturen 166 enthalten (hier tangentiale) Nuten 118 an einer gemäß Figur 3 oberen Hauptoberfläche der Rotoreinrichtung 102, vertikale Durchgänge 126 zwischen den beiden Hauptoberflächen und einen (hier radialen) Leitungsabschnitt 128. Der Leitungsabschnitt 128 wird durch eine Nut in der gemäß Figur 3 unteren Hauptoberfläche des ersten Rotorelements 122 und eine im montierten Zustand daran angrenzende Hauptoberfläche des zweiten Rotorelements 124 gebildet. Enden der Durchgänge 126 und Enden des Leitungsabschnitts 128 sind miteinander fluidisch verbunden bzw. fallen zusammen, so dass ein U-förmiger Hohlraum gebildet ist.

Obgleich in Figur 3 nicht dargestellt, kann der statorseitige Teil des mindestens einen Fluidkanals 106 durch mindestens zwei Fluidanschlüsse 120 (siehe Figur 2) an der Statoreinrichtung 104 gebildet sein. In unterschiedlichen Schaltzuständen des Fluidventils 95 können die Fluidanschlüsse 120 in unterschiedliche fluidische Kopplungszustände (d.h. fluidisch gekoppelt oder fluidisch entkoppelt) mit den Nuten 118 bzw. den oberen Enden der Durchgänge 126 gebracht werden.

Wie in Figur 3 dargestellt, ist die Rotoreinrichtung 102 durch ein scheibenförmiges erstes Rotorelement 122 und ein scheibenförmiges zweites Rotorelement 124 gebildet, die unter Ausbildung eines einstückigen Körpers mittels Ultraschall- und/oder Thermokompressionsbondens zu der Rotoreinrichtung 102 gefügt werden können. Wie in Figur 3 zu erkennen ist, definiert das den Leitungsabschnitt 128, die Nuten 118 und die Durchgänge 126 aufweisende erste Rotorelement 122 einen Teil des mindestens einen Fluidkanals 106, wohingegen das zweite Rotorelement 124 eine im gezeigten Ausführungsbeispiel durchgehende Abdeckung des ersten Rotorelements 122 bewirkt. Die Nuten 118 einerseits und der Leitungsabschnitt 128 andererseits erstrecken sich über unterschiedliche Radial- und Tangentialbereiche und in axial zueinander versetzten Ebenen der Rotoreinrichtung 102. Da sich die Nuten 118 und der Leitungsabschnitt 128 in unterschiedlichen Axialebenen der Rotoreinrichtung 102 erstrecken, bleiben diese stets fluidisch entkoppelt, obgleich sie sich über überlappende Radial- und/oder Tangentialbereiche hinweg erstrecken können. Auf diese Weise ist es möglich, komplexe fluidische Strukturen kompakt in der Rotoreinrichtung 102 zu integrieren. Anders ausgedrückt ist es durch die beschriebene Architektur unterschiedlicher Aussparungen in unterschiedlichen Axialebenen der Rotoreinrichtung 102 möglich, in unterschiedlichen Durchmesserbereichen der Rotoreinrichtung 102 in kompakter Weise und unter zuverlässiger Aufrechterhaltung einer fluidischen Entkopplung unterschiedliche fluidische Strukturen 106 auszubilden. Dies wird anders ausgedrückt dadurch bewerkstelligt, dass ein Teil 170 der Fluidstrukturen 166 der Rotoreinrichtung 102 in auf eine Rotationsachse 162 bezogener Axialrichtung 164 gegenüber der ebenen Kontaktfläche 108 versetzt ist. Dadurch überlappen dieser Teil 170 und ein anderer Teil 172 der Fluidstrukturen 166 an der Kontaktfläche 108 der Rotoreinrichtung 102 bei Blick entlang der Axialrichtung 164. Die als Rotoreinrichtung 102 ausgebildete erste Ventilkomponente kann sich beim Schaltbetrieb in einer Drehrichtung 163 (oder in umgekehrter Richtung) drehen, um unterschiedliche fluidische Kopplungszustände mit der Statoreinrichtung 104 auszubilden. Der Teil 170 der Fluidstrukturen 166 der Rotoreinrichtung 102 befindet sich an der gemäß Figur 3 unteren Hauptoberfläche des ersten Rotorelements 122, wohingegen sich der andere Teil 172 der Fluidstrukturen 166 der Rotoreinrichtung 102 an der gemäß Figur 3 oberen Hauptoberfläche des ersten Rotorelements 122 befindet und daher unmittelbar an die Kontaktfläche 108 der Statoreinrichtung 104 des Fluidventils 95 angrenzt.

Wie am besten in Figur 3 zu erkennen ist, weist das Fluidventil 95 ferner Leak-Dichtelement 130 auf, das zum fluidischen Dichten zwischen der Rotoreinrichtung 102 und der Statoreinrichtung 104 angeordnet ist. Hierfür kann das als Leak-Dichtring ausgebildete Dichtelement 130 in Ringnut 133 der Rotoreinrichtung 102 eingesetzt werden. Das Dichtelement 130 kann zum Beispiel aus Polytetrafluorethylen (PTFE) oder einem PTFE und EPDM Verbund oder einem anderen tribologischen Paar hergestellt werden.

**Figur 4** zeigt eine Querschnittsansicht eines Fluidventils 95 gemäß einem exemplarischen Ausführungsbeispiel der Erfindung.

Wie einem Detail 131 in Figur 4 zu entnehmen ist, kann die Beschichtung 110 der Rotoreinrichtung 102 (alternativ oder ergänzend der Statoreinrichtung 104) mehrere Schichten 112, 114 aufweisen. Gemäß Figur 4 ist eine erste Schicht 112 aus Reingold direkt auf einem Grundkörper 116 (aus Stahl) der Rotoreinrichtung 102 gebildet. Eine zweite Schicht 114 auf der ersten Schicht 112 weist Hartgold auf. Hingegen zeigt Detail 137 in Figur 4, dass die Beschichtung 110 der Statoreinrichtung 104 (alternativ oder ergänzend der Rotoreinrichtung 102) als Monoschicht auf einem Grundkörper 116 (zum Beispiel ebenfalls aus Stahl) ausgebildet sein kann. Die Monoschicht kann zum Beispiel Hartgold, DLC oder Diamant aufweisen. Es ist möglich, dass eine oder beide Ventilkomponenten 102, 104 mit genau einer oder mit mehreren Schichten 112, 114 beschichtet ist oder sind, und dass diese Beschichtungen 110 identisch oder unterschiedlich sind. Besonders bevorzugt sind die Kombinationen Hartgold-Hartgold und Hartgold-DLC.

Figur 4 zeigt, dass alle freiliegenden Oberflächen der Statoreinrichtung 104, welche die zweite Ventilkomponente bildet, und der Rotoreinrichtung 102, welche die erste Ventilkomponente bildet, mit der jeweiligen Beschichtung 110 bedeckt sind. Anders ausgedrückt wird die jeweilige Beschichtung 110 mit einem Verfahren (zum Beispiel Bedampfen, chemische Gasphasenabscheidung, PACVD, etc.) hergestellt, bei dem die Beschichtung 110 mittels eines nichtselektiven Abscheideprozesses auf der jeweiligen Ventilkomponente 102, 104 ausgebildet wird. Dies ist herstellungstechnisch einfach, da dann das Beschichten mit einer einfachen Prozessführung erfolgen kann. Eine selektive Beschichtung nur bestimmter Oberflächenbereiche ist dann entbehrlich. Die Beschichtung 110 hat nicht nur auf den Kontaktflächen 108, sondern auch auf den Oberflächen der Fluidstrukturen 166, 168 vorteilhafte Wirkungen, wie oben beschrieben.

Auch gemäß Figur 4 sind in Projektion auf die dortige vertikale Achse überlappende und zueinander axial versetzte Fluidstrukturen 166, 168 gezeigt, die voneinander fluidisch entkoppelt sind. Dadurch ist das Fluidventil 95 gemäß Figur 4 kompakt, flexibel gestaltbar, zeigt eine hohe fluidtechnische Performance und erlaubt kurze Fluidwege.

**Figur 5** zeigt eine Querschnittsansicht einer als Rotoreinrichtung 102 ausgebildeten ersten Ventilkomponente eines Fluidventils 95 gemäß einem exemplarischen Ausführungsbeispiel der Erfindung.

Figur 5 zeigt, wie zwei Rotorelemente 122, 124 der ersten Ventilkomponente 102 einen integralen einstückigen Körper bilden, nachdem sie mittels Ultraschall- und/oder Thermokompressionsbondens aneinander befestigt worden sind.

Bei dem Fluidventil 95 gemäß Figur 5 liegt der (mit einer in Figur 5 nicht gezeigten zweiten Ventilkomponente 104 fluiddicht zusammenwirkenden) Kontaktfläche 108 der Rotoreinrichtung 102 als ein anderer Teil einer hier inneren Oberfläche der Rotoreinrichtung 102 eine parallele Gegenfläche 183 mit einer Fluidstruktur 166 gegenüber. Die Gegenfläche 183 begrenzt das Rotorelement 122 und liegt an dieser an dem Rotorelement 124 an. Sowohl die Fluidstrukturen 166 als auch die Gegenfläche 183 sind mit einer goldhaltigen und/oder platinhaltigen Beschichtung 110 versehen.

Die Gegenfläche 183 des Rotorelements 122 ist an der Beschichtung 110 mit einem Abdeckkörper in Form des Rotorelements 124 thermogebondet und/oder ultraschallgebondet. Die Fähigkeit der Rotorelemente 122, 124 mittels Thermobondens (d.h. Aneinanderdrücken bei erhöhter Temperatur bzw. erhöhtem Energieeintrag) und/oder Ultraschallbondens (das heißt Bonden durch das Zuführen von Ultraschall) miteinander trennfest verbunden zu werden, wird durch die goldhaltige und/oder platinhaltige Beschichtung 110 deutlich erhöht. Dadurch wird auch die Druckstabilität des Fluidventils 95 erhöht.

Indem die Wandungen des Rotorelements 122, welche die Fluidstrukturen 166 und folglich auch eines Teils der Fluidleitungen 106 begrenzen, mit der goldhaltigen und/oder platinhaltigen Beschichtung 110 bedeckt sind, werden biokompatible Fluidleitungen 106 geschaffen. Diese erlauben einen Transport selbst aggressiver Fluide (zum Beispiel Lösungsmittel oder biologische Flüssigkeiten), ohne das Fluidventil 95 oder die Fluide zu schädigen. Auch ist mit einer solchen Beschichtung 110 aus dem reaktionsträgen Edelmetall Gold eine Korrosion des Fluidventils 95 stark unterdrückt.

**Figur 6** zeigt eine Fluidverarbeitungsvorrichtung 111 mit einem Fluidventil 95 gemäß einem exemplarischen Ausführungsbeispiel der Erfindung.

Eine Nadel 141 ist in einem Sitz 143 angeordnet und kann aus diesem herausgefahren werden (nicht gezeigt), um fluidische Probe aus einem Probenbehälter (nicht gezeigt) einzuziehen und nach Zurückfahren in den Sitz 143 über das Fluidventil 95 in einen fluidischen Pfad mit einem fluidischen Reaktor 199 zu injizieren. Beim Einziehen der Probe durch die Nadel 141 kann die Probe zeitweise in einem Zwischenspeichervolumen 147, einer sogenannten Sample Loop, zwischengespeichert werden. Das Einziehen der Probe kann durch eine Dosierpumpe 149 bewerkstelligt werden. Ein Kolben derselben kann zum Einziehen in einer Kolbenkammer zurückfahren und zum Injizieren nach vorne fahren. Ferner sind in Figur 6 ein Waste 165, eine fluidische Restriktion 167, Rückschlagventile 169 und ein Flüssigkeitsbehälter 171 gezeigt. Um die Fluidverarbeitungsvorrichtung 111 zu betreiben, ist das Fluidventil 95 mit Nuten 118 und Fluidanschlüssen 120 versehen, die in einer Rotoreinrichtung 102 bzw. einer Statoreinrichtung 104 in unterschiedlichen Ebenen angeordnet sind. Insbesondere ist ein Leitungsabschnitt 128 als Teil 170 von Fluidleitungen 106 gegenüber einer Papierebene von Figur 6 nach unten versetzt, wohingegen ein anderer Teil 172 der Fluidleitungen 106 auch in der Papierebene von Figur 6 verlaufen kann. Indem insbesondere die radial verlaufende Nut entsprechend Leitungsabschnitt 128 in einer anderen axialen Ebene angeordnet ist als die Fluidanschlüsse 120 gemäß Teil 172 (und als die tangentialen Nuten 118 zwischen den Fluidanschlüssen 120), ist ein rotatorisches Schalten des Fluidventils 95 ermöglicht, ohne dass der Leitungsabschnitt 128 gemäß dem Teil 170 dabei unerwünscht zeitweise mit den Fluidanschlüssen 120 gemäß dem anderen Teil 172 fluidisch gekoppelt wird.

Figur 7 bis Figur 10 zeigen als funktionelle Fluidbauteile ausgebildete Nuten 118 einer Rotoreinrichtung 102 eines Fluidventils 95 gemäß einem exemplarischen Ausführungsbeispiel der Erfindung. Figur 7 bis Figur 10 zeigen, welche zusätzlichen fluidischen Funktionen eine Nut 118 erfüllen kann, die in einer der Statoreinrichtung 104 abgewandten Hauptfläche der Rotoreinrichtung 102 angeordnet sein kann. Mittels eines entsprechenden Fluidkanals 106 kann zum Beispiel zumindest eine Funktion aus einer Gruppe bereitgestellt werden, die besteht aus einer fluidischen Restriktion, einer fluidischen Verzögerungseinrichtung zum Verzögern eines Fluidflusses, einem Zwischenspeichervolumen zum Zwischenspeichern einer vordefinierten Fluidmenge, und einer fluidischen Mischeinrichtung, etc.

Gemäß **Figur 7** ist ein fluidisches Zwischenspeichervolumen bereitgestellt. Eine fluidische Restriktion durch einen lokal reduzierten Nutdurchmesser ist in **Figur 8** dargestellt. In **Figur 9** ist eine Mischeinrichtung vorgesehen, die zwischen zwei Fluidanschlüssen 126 mehrere fluidische Pfade unterschiedlicher Durchmesser und unterschiedlicher Länge vorsieht, damit in die verschiedenen Pfade eingekoppelte unterschiedliche Fluidportionen durch unterschiedliche Laufzeiten gemischt werden können. Gemäß **Figur 10** ist eine fluidische Verzögerungseinrichtung geschaffen, da der Pfad zwischen den beiden Fluidanschlüssen 126 durch eine spiralförmige Nut im Vergleich zu einer linearen Direktverbindung künstlich verlängert ist.

**Figur 11** zeigt eine Querschnittsansicht eines Fluidventils 95 gemäß einem exemplarischen Ausführungsbeispiel der Erfindung.

In Figur 11 ist dargestellt, dass eine Rotoreinrichtung 102 auch durch mehr als zwei Rotorelemente 122, 124 (hier durch drei gebondete Rotorelemente 122, 124, 199) gebildet sein kann. Zusätzlich ist gemäß Figur 11 ein drittes Rotorelement 199 vorgesehen, welches das Ausbilden auch noch komplexerer fluidischer Strukturen ermöglicht.

**Figur 12** zeigt eine dreidimensionale Ansicht einer Rotoreinrichtung 102 und eines Teils einer Statoreinrichtung 104 eines Fluidventils 95 gemäß einem exemplarischen Ausführungsbeispiel der Erfindung.

Das in Figur 12 dargestellte Fluidventil 95 ist ebenfalls für einen Betrieb mit einem Probentrenngerät 10 ausgebildet und weist eine im Detail dargestellte Rotoreinrichtung 102 mit Fluidstrukturen 166 auf. Nur teilweise und schematisch dargestellt ist eine mit der Rotoreinrichtung 102 kooperierende Statoreinrichtung 104 mit Fluidstrukturen 168, von denen in Figur 12 nur ein Fluidanschluss 120 gezeigt ist. Wie in den zuvor beschriebenen Ausführungsbeispielen sind die Rotoreinrichtung 102 und die Statoreinrichtung 104 an korrespondierenden Kontaktflächen 108 miteinander fluiddicht gekoppelt und um eine Rotationsachse 162 relativ zueinander rotierfähig (siehe Drehpfeil 193). Obgleich dies im Detail in Figur 12 nicht dargestellt ist, kann in bestimmten Rotationszuständen mittels der Fluidstrukturen 166, 168 ein durch die Kontaktfläche 108 hindurch verlaufender Fluidkanal 106 gebildet werden. Die hierfür eingesetzten Fluidstrukturen 168 der Statoreinrichtung 104, nämlich mit Austrittsöffnungen 191 (auf Radius R1 bzw. R2) der Fluidstrukturen 166 der Rotoreinrichtung 102 an der Kontaktfläche 108 in Deckung gebrachte weitere Fluidanschlüsse 120, sind in Figur 12 nicht dargestellt.

Ein Teil 170 der Fluidstrukturen 166 der Rotoreinrichtung 102 ist in auf die Rotationsachse 162 bezogener Axialrichtung 164 gegenüber der Kontaktfläche 108 versetzt, so dass in zumindest einem Rotationszustand des Fluidventils 95 dieser Teil 170 und ein anderer Teil 172 der Fluidstrukturen 168 der Statoreinrichtung 104 (nämlich der in Figur 12 dargestellte Fluidanschluss 120 auf Radius R3) bei Blick entlang der Axialrichtung 164 überlappen bzw. sogar fluchten. Dies ist dann der Fall, wenn gegenüber der Darstellung gemäß Figur 12 die Rotoreinrichtung 102 und die Statoreinrichtung 104 relativ zueinander um einen Winkel α verdreht worden sind. In dem letztgenannten Rotationszustand überlappen bzw. fluchten der Teil 170 und der andere Teil 172 bei Blick entlang der Axialrichtung 164, ohne miteinander fluidisch gekoppelt zu sein.

Obgleich dies in Figur 12 nicht dargestellt ist, erlaubt das Hindurchführen der Fluidstrukturen 166 der Rotoreinrichtung 102 entlang einem Inneren der Rotoreinrichtung 102 auch, dass der andere Teil 172 durch mehrere Fluidanschlüsse 120 der Statoreinrichtung 104 gebildet sein kann, die auf zumindest zwei unterschiedlichen Radien, bezogen auf die Rotationsachse 162, angeordnet sein können. Eine Konfiguration mit Fluidanschlüssen 120 auf unterschiedlichen Radien ist zum Beispiel in Figur 6 dargestellt.

Gemäß Figur 12 erstreckt sich der Teil 170 von einem ersten Radius R1 bis zu einem zweiten Radius R2 der Rotoreinrichtung 102. Der andere Teil 172 ist auf einem dritten Radius R3 angeordnet, der größer als der erste Radius R1 und kleiner als der zweite Radius R2 ist. Die Radien R1, R2, R3 sind allesamt auf die Rotationsachse 162 bezogen.

Wie in Figur 5 kann auch in Figur 12 der eine Teil 170 durch eine Nut 118 in einem ersten Rotorelement 122 der Rotoreinrichtung 102 gebildet sein, welche Nut 118 durch ein zweites Rotorelement 124 abgedeckt ist. Auf diese Weise kann mit geringem Herstellungsaufwand eine im Inneren der Rotoreinrichtung 102 vollumfänglich durch Material der Rotoreinrichtung 102 begrenzte Kapillare oder fluidische Strecke gebildet werden.

Der axial versetzte Teil 170 der Fluidstrukturen 166 kann sich in Radialrichtung der Rotoreinrichtung 102 erstrecken und begrenzt dennoch nicht die Designfreiheit dahingehend, Fluidanschlüsse 120 der Statoreinrichtung 104 auf allen gewünschten Radien vorzusehen. Dadurch kann ungeachtet der Erstreckung des Teils 170 über einen großen radialen Bereich hinweg ein Vorsehen und freies Bewegen der Rotoreinrichtung 102 entlang beliebig anbringbarer Fluidanschlüsse 120 der Statoreinrichtung 104 erfolgen, ohne dass beim Schalten vorübergehend eine unerwünschte fluidische Kopplung zwischen den gezeigten Fluidstrukturen 166 und 168 erfolgt.

Zumindest ein Teil der Kontaktfläche 108 von zumindest einer der Rotoreinrichtung 102 und der Statoreinrichtung 104 kann auch gemäß Figur 12 mit einer Beschichtung 110 versehen sein, wie bezugnehmend auf Figur 2 bis Figur 5 beschrieben.

**Figur 13** zeigt eine dreidimensionale Ansicht einer Rotoreinrichtung 102 eines Fluidventils 95 gemäß einem anderen exemplarischen Ausführungsbeispiel der Erfindung. **Figur 14** zeigt eine Draufsicht der Rotoreinrichtung 102 gemäß Figur 13.

Bei dem Fluidventil 95 gemäß Figur 13 und Figur 14 ist auch der andere Teil 172 den Fluidstrukturen 166 der Rotoreinrichtung 102 zugehörig. Der andere Teil 172 ist ferner gegenüber dem Teil 170 der Fluidstrukturen 166 der Rotoreinrichtung 102 in auf die Rotationsachse 162 bezogener Axialrichtung 164 gegenüber der Kontaktfläche 108 versetzt. Genauer gesagt ist der andere Teil 172 der Fluidstrukturen 166 an der Kontaktfläche 108 und in der Papierebene gemäß Figur 14 angeordnet. Der Teil 170 ist als radial verlaufender Abschnitt einer der Fluidstrukturen 166 ausgebildet, der unterhalb der Papierebene gemäß Figur 14 angeordnet ist. Der andere Teil 172 ist als Kreisringsegment einer anderen der Fluidstrukturen 166 ausgebildet. Genauer gesagt ist gemäß Figur 13 und Figur 14 der andere Teil 172 der Fluidstrukturen 166 eine Nut 118 der Rotoreinrichtung 102 an der Kontaktfläche 108. Die Fluidstrukturen 166 der Rotoreinrichtung 102 haben darüber hinaus zwei zueinander parallele und sich in Axialrichtung 164 erstreckende Durchgänge 126 durch die Rotoreinrichtung 102 von der Kontaktfläche 108 bis zu dem Teil 170. Die Durchgänge 126 und der Teil 170 bilden dadurch einen im Wesentlichen U-förmigen Bypass für den zumindest einen anderen Teil 172, der von dem Teil 170 fluidisch entkoppelt ist. Dadurch ist es ermöglicht, dass ein erstes Fluid durch den Teil 170 fließt, während unabhängig davon ein zweites Fluid durch den anderen Teil 172 fließt. Die zugehörigen fluidischen Kanäle sind auf engstem Raum untergebracht und erlauben ein kompaktes Design.

Der axial versetzte Teil 170 der Fluidstrukturen 166 kann sich in Radialrichtung der Rotoreinrichtung 102 erstrecken und begrenzt dennoch nicht die Designfreiheit dahingehend, den anderen Teil 172 der Fluidstrukturen 166 auf allen gewünschten Radien vorzusehen. Dadurch kann ungeachtet der Erstreckung des Teils 170 über einen großen radialen Bereich hinweg ein Vorsehen des anderen Teils 172 der Rotoreinrichtung 102 entlang im Wesentlichen beliebig wählbarer Raumbereiche erfolgen, ohne dass eine unerwünschte fluidische Kopplung zwischen den gezeigten Fluidstrukturen 166 und 168 erfolgt.

Zumindest ein Teil der Kontaktfläche 108 von zumindest einer der Rotoreinrichtung 102 und der Statoreinrichtung 104 kann auch gemäß Figur 13 und Figur 14 mit einer Beschichtung 110 versehen sein, wie bezugnehmend auf Figur 2 bis Figur 5 beschrieben.

## Patentansprüche

1. Fluidventil (95) für ein Probentrenngerät (10), wobei das Fluidventil (95) aufweist:
eine erste Ventilkomponente (102);
eine zweite Ventilkomponente (104);
wobei die erste Ventilkomponente (102) und die zweite Ventilkomponente (104) aneinander angrenzen, relativ zueinander rotierbar oder längsverschiebbar beweglich sind, und derart eingerichtet sind, dass in zumindest einem Schaltzustand zwischen diesen mindestens ein schaltbarer Fluidkanal (106) gebildet ist;
wobei der mindestens eine Fluidkanal (106) aus mindestens einer Nut (118) in der ersten Ventilkomponente (102) und mindestens zwei Fluidanschlüssen (120) an der zweiten Ventilkomponente (104) gebildet ist, und wobei in unterschiedlichen Schaltzuständen des Fluidventils (95) die Fluidanschlüsse (120) in unterschiedliche fluidische Kopplungszustände bezüglich der mindestens einen Nut (118) bringbar sind;
wobei zumindest ein Teil einer Oberfläche von zumindest einer der ersten Ventilkomponente (102) und der zweiten Ventilkomponente (104) mit einer goldhaltigen und/oder platinhaltigen Beschichtung (110) versehen ist;
wobei das Fluidventil (95) ein Scherventil ist,
wobei die erste Ventilkomponente (102) als Teil ihrer Oberfläche eine Kontaktfläche (108) und die zweite Ventilkomponente (104) als Teil ihrer Oberfläche eine Kontaktfläche (108) aufweist, wobei die erste Ventilkomponente (102) und die zweite Ventilkomponente (104) an den Kontaktflächen (108) aneinander angrenzen, und
wobei zumindest ein Teil der Kontaktfläche (108) von zumindest einer der ersten Ventilkomponente (102) und der zweiten Ventilkomponente (104) mit der goldhaltigen und/oder platinhaltigen Beschichtung (110) versehen ist, so dass eine Schmierung zwischen der ersten Ventilkomponente (102) und der zweiten Ventilkomponente (104), ein Ausgleich der Ventilkomponenten und ein verschleißarmen Betrieb begünstigt werden.

2. Das Fluidventil (95) gemäß Anspruch 1, wobei die Beschichtung (110) an mindestens einer gesamten der Kontaktflächen (108) zwischen der ersten Ventilkomponente (102) und der zweiten Ventilkomponente (104) ausgebildet ist.

3. Das Fluidventil (95) gemäß Anspruch 1 oder 2, wobei die Beschichtung (110) an der Kontaktfläche (108) der ersten Ventilkomponente (102) und an der Kontaktfläche (108) der zweiten Ventilkomponente (104) ausgebildet ist.

4. Das Fluidventil (95) gemäß einem der Ansprüche 1 bis 3, wobei der Kontaktfläche (108) von zumindest einer der ersten Ventilkomponente (102) und der zweiten Ventilkomponente (104) als anderer Teil der Oberfläche eine Gegenfläche (183) mit mindestens einer Fluidstruktur (166, 168) mit einem weiteren Teil der Oberfläche gegenüberliegt.

5. Das Fluidventil (95) gemäß Anspruch 4, wobei zumindest ein Teil von mindestens einer der Fluidstrukturen (166, 168) und/oder der Gegenfläche (183) mit der goldhaltigen und/oder platinhaltigen Beschichtung (110) versehen ist.

6. Das Fluidventil (95) gemäß Anspruch 5, wobei die Gegenfläche (183) an der Beschichtung (110) mit einem Abdeckkörper (124) gebondet ist.

7. Das Fluidventil (95) gemäß einem der Ansprüche 1 bis 6,
wobei zumindest ein Teil der Beschichtung (110) Hartgold aufweist oder daraus besteht; und/oder
wobei zumindest ein Teil der Beschichtung (110) Kobalt in einem Bereich zwischen 0,05 Gewichtprozent und 1 Gewichtprozent, insbesondere in einem Bereich zwischen 0,2 Gewichtprozent und 0,3 Gewichtprozent, bis zu 0,7 Gewichtprozent Kohlenstoff und ansonsten Gold aufweist.

8. Das Fluidventil (95) gemäß einem der Ansprüche 1 bis 7, aufweisend zumindest eines der folgenden Merkmale:
wobei die erste Ventilkomponente (102) und die zweite Ventilkomponente (104) mit unterschiedlichen Beschichtungen (110) versehen sind;
wobei die Beschichtung (110) mehrere Schichten (112, 114) aufweist, wobei insbesondere eine erste Schicht (112) der Beschichtung (110) direkt auf einem Grundkörper (116) der jeweiligen Ventilkomponente (102, 104) gebildet ist, und weiter insbesondere Reingold aufweist, und eine zweite Schicht (114) auf der ersten Schicht (112) gebildet ist, und weiter insbesondere Hartgold aufweist;
wobei ein Grundkörper (116) zumindest einer der Ventilkomponenten (102, 104), auf dem die Beschichtung (110) angeordnet ist, Metall aufweist, insbesondere Stahl;
wobei die erste Ventilkomponente (102) und die zweite Ventilkomponente (104) derart relativ zueinander bewegbar sind, dass dadurch mindestens zwei unterschiedliche Fluidkopplungszustände des mindestens einen Fluidkanals (106) einstellbar sind;
wobei die erste Ventilkomponente (102) als Rotoreinrichtung ausgebildet ist und die zweite Ventilkomponente (104) als Statoreinrichtung ausgebildet ist, wobei die Rotoreinrichtung und die Statoreinrichtung relativ zueinander rotierfähig sind.

9. Das Fluidventil (95) gemäß einem der Ansprüche 1 bis 8, wobei die erste Ventilkomponente (102) ein erstes Rotorelement (122) und ein zweites Rotorelement (124) aufweist, insbesondere aneinander gebondet, wobei das erste Rotorelement (122) zumindest einen Teil (170, 172) des mindestens einen Fluidkanals (106) definiert und wobei das zweite Rotorelement (124) eine Abdeckung des ersten Rotorelements (122) bildet, insbesondere wobei das erste Rotorelement (122) als zumindest einen Teil (172) eines ersten Fluidkanals (106) eine Nut (118) auf einer der beiden gegenüberliegenden Hauptflächen des ersten Rotorelements (122) und als zumindest einen Teil (170) eines zweiten Fluidkanals (106) mindestens einen Durchgang (126) durch das erste Rotorelement (122) und eine damit fluidisch gekoppelte andere Nut (118) auf der anderen der beiden gegenüberliegenden Hauptflächen des ersten Rotorelements (122) aufweist.

10. Das Fluidventil (95) gemäß einem der Ansprüche 1 bis 9, aufweisend zumindest eines der folgenden Merkmale:
wobei die erste Ventilkomponente (102) als zumindest einen Teil (172) eines ersten Fluidkanals (106) eine Nut (118) auf einer der zweiten Ventilkomponente (104) zugewandten Hauptfläche der ersten Ventilkomponente (102) und als zumindest einen Teil (170) eines zweiten Fluidkanals (106) mindestens einen Durchgang (126) durch zumindest einen Teil der ersten Ventilkomponente (102) und einen damit fluidisch gekoppelten Leitungsabschnitt (128) aufweist, wobei sich insbesondere die Nut (118) einerseits und der Leitungsabschnitt (128) andererseits über unterschiedliche, insbesondere überlappende, Bereiche, insbesondere Radialbereiche, der ersten Ventilkomponente (102) erstrecken;
aufweisend ein Dichtelement (130), das zum Dichten zwischen der ersten Ventilkomponente (102) und der zweiten Ventilkomponente (104) angeordnet ist, wobei das Dichtelement (130) insbesondere ein Dichtring ist und/oder Polytetrafluorethylen, einen Polytetrafluorethylen - Ethylen-Propylen-Dien-Verbund oder ein Perfluor-Elastomer, insbesondere nanoaktiviert, aufweist oder daraus besteht;
wobei zumindest eine der ersten Ventilkomponente (102) und der zweiten Ventilkomponente (104) zumindest ein Material aus einer Gruppe aufweist, die besteht aus einem Metall, einem Kunststoff, insbesondere mit Füllpartikeln oder ohne Füllpartikel, und einer Keramik;
wobei in unterschiedlichen Durchmesserbereichen der ersten Ventilkomponente (102) unterschiedliche fluidische Strukturen (106) gebildet sind;
wobei mittels des mindestens einen Fluidkanals (106) zumindest eine fluidische Funktion aus einer Gruppe bereitgestellt ist, die besteht aus einer fluidischen Restriktion, einer fluidischen Verzögerungseinrichtung zum Verzögern eines Fluidflusses, einem Zwischenspeichervolumen zum Zwischenspeichern einer vordefinierten Fluidmenge, und einer fluidischen Mischeinrichtung.

11. Das Fluidventil (95) gemäß einem der Ansprüche 1 bis 10, wobei zumindest ein Teil (170) von mindestens einer Fluidstruktur (166) der ersten Ventilkomponente (102) in Axialrichtung (164) gegenüber den Kontaktflächen (108) versetzt ist, so dass in zumindest einem Schaltzustand des Fluidventils (95) dieser Teil (170) und zumindest ein anderer Teil (172) mindestens einer Fluidstruktur (166, 168) der ersten Ventilkomponente (102) und/oder der zweiten Ventilkomponente (104) bei Blick entlang der Axialrichtung (164) zumindest teilweise überlappen, insbesondere aufweisend zumindest eines der folgenden Merkmale:
wobei in dem zumindest einen Schaltzustand, in dem die zumindest teilweise Überlappung auftritt, der zumindest eine Teil (170) und der zumindest eine andere Teil (172) voneinander fluidisch entkoppelt sind;
wobei der zumindest eine andere Teil (172) durch mindestens einen Fluidanschluss (120) der als Statoreinrichtung ausgebildeten zweiten Ventilkomponente (104) gebildet ist;
wobei der zumindest eine andere Teil (172) der mindestens einen Fluidstruktur (166) der als Rotoreinrichtung ausgebildeten ersten Ventilkomponente (102) zugehörig ist und gegenüber dem zumindest einen Teil (170) der mindestens einen Fluidstruktur (166) der Rotoreinrichtung in Axialrichtung (164) versetzt ist.

12. Probentrenngerät (10) zum Trennen einer fluidischen Probe, wobei das Probentrenngerät (10) aufweist:
einen Fluidantrieb (20) zum Antreiben der in einer mobilen Phase befindlichen fluidischen Probe;
ein Fluidventil (95) gemäß einem der Ansprüche 1 bis 11 zum Einleiten der fluidischen Probe in die mobile Phase;
eine Probentrenneinrichtung (30) zum Trennen der in der mobilen Phase befindlichen fluidischen Probe.

13. Das Probentrenngerät (10) gemäß Anspruch 12, ferner aufweisend zumindest eines der folgenden Merkmale:
die Probentrenneinrichtung (30) ist als chromatographische Trenneinrichtung, insbesondere als Chromatographietrennsäule, ausgebildet;
das Probentrenngerät (10) ist zum Analysieren von zumindest einem physikalischen, chemischen und/oder biologischen Parameter von zumindest einer Fraktion der fluidischen Probe konfiguriert;
das Probentrenngerät (10) weist zumindest eines aus der Gruppe auf, die besteht aus einem Detektorgerät, einem Gerät zur chemischen, biologischen und/oder pharmazeutischen Analyse, einem Flüssigchromatografiegerät und einem HPLC-Gerät;
der Fluidantrieb (20) ist zum Antreiben der mobilen Phase mit einem hohen Druck konfiguriert;
der Fluidantrieb (20) ist zum Antreiben der mobilen Phase mit einem Druck von mindestens 100 bar, insbesondere von mindestens 500 bar, weiter insbesondere von mindestens 1000 bar, konfiguriert;
das Probentrenngerät (10) ist als mikrofluidisches Gerät konfiguriert;
das Probentrenngerät (10) ist als nanofluidisches Gerät konfiguriert;
das Probentrenngerät (10) ist als präparatives Gerät konfiguriert;
das Probentrenngerät (10) weist eine Injektoreinrichtung (40) mit dem Fluidventil (95) zum Einleiten der fluidischen Probe in einen fluidischen Pfad zwischen dem Fluidantrieb (20) und der Probentrenneinrichtung (30) auf;
das Probentrenngerät (10) weist einen Detektor (50), insbesondere einen Fluoreszenzdetektor oder UV-Absorptionsdetektor, zum Detektieren der getrennten fluidischen Probe auf;
das Probentrenngerät (10) weist einen Probenfraktionierer oder einen Abflussbehälter (60) zum Fraktionieren der getrennten fluidischen Probe auf.

14. Verfahren zum Herstellen eines Fluidventils (95) für ein Probentrenngerät (10), wobei das Verfahren aufweist:
Bereitstellen einer ersten Ventilkomponente (102) und einer zweiten Ventilkomponente (104) derart, dass diese aneinander angrenzen und relativ zueinander rotierbar oder längsverschiebbar beweglich sind;
Ausbilden der ersten Ventilkomponente (102) und der zweiten Ventilkomponente (104) derart, dass zwischen diesen in zumindest einem Schaltzustand mindestens ein schaltbarer Fluidkanal (106) gebildet ist,
wobei der mindestens eine Fluidkanal (106) aus mindestens einer Nut (118) in der ersten Ventilkomponente (102) und mindestens zwei Fluidanschlüssen (120) an der zweiten Ventilkomponente (104) gebildet ist, und wobei in unterschiedlichen Schaltzuständen des Fluidventils (95) die Fluidanschlüsse (120) in unterschiedliche fluidische Kopplungszustände bezüglich der mindestens einen Nut (118) bringbar sind;
Versehen von zumindest einem Teil einer Oberfläche von zumindest einer der ersten Ventilkomponente (102) und der zweiten Ventilkomponente (104) mit einer goldhaltigen und/oder platinhaltigen Beschichtung (110);
wobei das Fluidventil (95) ein Scherventil ist,
wobei die erste Ventilkomponente (102) als Teil ihrer Oberfläche eine Kontaktfläche (108) und die zweite Ventilkomponente (104) als Teil ihrer Oberfläche eine Kontaktfläche (108) aufweist, wobei die erste Ventilkomponente (102) und die zweite Ventilkomponente (104) an den Kontaktflächen (108) aneinander angrenzen, und
wobei zumindest ein Teil der Kontaktfläche (108) von zumindest einer der ersten Ventilkomponente (102) und der zweiten Ventilkomponente (104) mit der goldhaltigen und/oder platinhaltigen Beschichtung (110) versehen ist, so dass eine Schmierung zwischen der ersten Ventilkomponente (102) und der zweiten Ventilkomponente (104), ein Ausgleich der Ventilkomponenten und ein verschleißarmen Betrieb begünstigt werden.

15. Das Verfahren gemäß Anspruch 14, wobei die Beschichtung (110) mittels eines nichtselektiven Abscheideprozesses auf der jeweiligen Ventilkomponente (102, 104) ausgebildet wird.

## Claims

1. A fluid valve (95) for a sample separation device (10), wherein the fluid valve (95) comprises:
a first valve component (102);
a second valve component (104);
wherein the first valve component (102) and the second valve component (104) adjoin each other, are rotatable or longitudinally displaceable relative to each other, and are configured such that in at least one switching state at least one switchable fluid channel (106) is formed between them;
wherein the at least one fluid channel (106) is formed of at least one groove (118) in the first valve component (102) and at least two fluid ports (120) at the second valve component (104), and wherein in different switching states of the fluid valve (95) the fluid ports (120) can be brought into different fluidic coupling states with respect to the at least one groove (118);
wherein at least a part of a surface of at least one of the first valve component (102) and the second valve component (104) is provided with a gold-containing and/or platinum-containing coating (110);
wherein the fluid valve (95) is a shear valve,
wherein the first valve component (102) comprises a contact surface (108) as part of its surface and the second valve component (104) comprises a contact surface (108) as part of its surface, wherein the first valve component (102) and the second valve component (104) adjoin each other at the contact surfaces (108), and
wherein at least a part of the contact surface (108) of at least one of the first valve component (102) and the second valve component (104) is provided with the gold-containing and/or platinum-containing coating (110), so that a lubrication between the first valve component (102) and the second valve component (104), a balance of the valve components and a low-wear operation are promoted.

2. The fluid valve (95) according to claim 1, wherein the coating (110) is formed at at least an entire one of the contact surfaces (108) between the first valve component (102) and the second valve component (104).

3. The fluid valve (95) according to claim 1 or 2, wherein the coating (110) is formed at the contact surface (108) of the first valve component (102) and at the contact surface (108) of the second valve component (104).

4. The fluid valve (95) according to one of the claims 1 to 3, wherein the contact surface (108) of at least one of the first valve component (102) and the second valve component (104) as another part of the surface is opposed by a counter surface (183) with at least one fluid structure (166, 168) with another part of the surface.

5. The fluid valve (95) according to claim 4, wherein at least a part of at least one of the fluid structures (166, 168) and/or the counter surface (183) is provided with the gold-containing and/or platinum-containing coating (110).

6. The fluid valve (95) according to claim 5, wherein the counter surface (183) is bonded to the coating (110) with a cover body (124).

7. The fluid valve (95) according to one of the claims 1 to 6,
wherein at least a part of the coating (110) comprises or consists of hard gold; and/or
wherein at least a part of the coating (110) comprises cobalt in a range between 0.05 weight percent and 1 weight percent, in particular in a range between 0.2 weight percent and 0.3 weight percent, up to 0.7 weight percent carbon, and otherwise gold.

8. The fluid valve (95) according to one of the claims 1 to 7, comprising at least one of the following features:
wherein the first valve component (102) and the second valve component (104) are provided with different coatings (110);
wherein the coating (110) comprises a plurality of layers (112, 114), wherein in particular a first layer (112) of the coating (110) is formed directly on a base body (116) of the respective valve component (102, 104), and further in particular comprises pure gold, and a second layer (114) is formed on the first layer (112), and further in particular comprises hard gold;
wherein a base body (116) of at least one of the valve components (102, 104), on which the coating (110) is arranged, comprises metal, in particular steel;
wherein the first valve component (102) and the second valve component (104) are movable relative to each other such that thereby at least two different fluid coupling states of the at least one fluid channel (106) are adjustable;
wherein the first valve component (102) is formed as a rotor unit and the second valve component (104) is formed as a stator unit, wherein the rotor unit and the stator unit are rotatable relative to each other.

9. The fluid valve (95) according to one of the claims 1 to 8, wherein the first valve component (102) comprises a first rotor element (122) and a second rotor element (124), in particular bonded to each other, wherein the first rotor element (122) defines at least one part (170, 172) of the at least one fluid channel (106) and wherein the second rotor element (124) forms a cover of the first rotor element (122), in particular wherein the first rotor element (122) comprises as at least one part (172) of a first fluid channel (106) a groove (118) on one of the two opposing main surfaces of the first rotor element (122) and as at least one part (170) of a second fluid channel (106) at least one passage (126) through the first rotor element (122) and another groove (118) fluidically coupled therewith on the other one of the two opposing main surfaces of the first rotor element (122).

10. The fluid valve (95) according to one of the claims 1 to 9, comprising at least one of the following features:
wherein the first valve component (102) comprises as at least one part (172) of a first fluid channel (106) a groove (118) on a main surface of the first valve component (102) facing the second valve component (104) and as at least one part (170) of a second fluid channel (106) at least one passage (126) through at least one part of the first valve component (102) and a conduit section (128) fluidically coupled therewith, wherein in particular the groove (118) on the one hand and the conduit section (128) on the other hand extend over different, in particular overlapping, regions, in particular radial regions, of the first valve component (102);
comprising a sealing element (130), which is arranged for sealing between the first valve component (102) and the second valve component (104), wherein the sealing element (130) is in particular a sealing ring and/or comprises or consists of polytetrafluoroethylene, a polytetrafluoroethylene-ethylene-propylene-diene composite or a perfluoroelastomer, in particular nanoactivated;
wherein at least one of the first valve component (102) and the second valve component (104) comprises at least one material from a group consisting of a metal, a plastic, in particular with filler particles or without filler particles, and a ceramic;
wherein in different diameter regions of the first valve component (102) different fluidic structures (106) are formed;
wherein by means of the at least one fluid channel (106) at least one fluidic function from a group consisting of a fluidic restriction, a fluidic delay unit for delaying a fluid flow, an intermediate storage volume for intermediate storing of a predefined fluid quantity, and a fluidic mixing device is provided.

11. The fluid valve (95) according to one of the claims 1 to 10, wherein at least one part (170) of at least one fluid structure (166) of the first valve component (102) is offset in an axial direction (164) with respect to the contact surfaces (108), so that in at least one switching state of the fluid valve (95) this part (170) and at least another part (172) of at least one fluid structure (166, 168) of the first valve component (102) and/or the second valve component (104) at least partially overlap when viewed along the axial direction (164),
in particular comprising at least one of the following features:
wherein in the at least one switching state, in which the at least partial overlap occurs, the at least one part (170) and the at least another part (172) are fluidically decoupled from each other;
wherein the at least one another part (172) is formed by at least one fluid port (120) of the second valve component (104) formed as a stator unit;
wherein the at least one another part (172) of the at least one fluid structure (166) is associated to the first valve component (102) formed as a rotor unit and is offset in the axial direction (164) with respect to the at least one part (170) of the at least one fluid structure (166) of the rotor unit.

12. A sample separation device (10) for separating a fluidic sample, wherein the sample separation device (10) comprises:
a fluid drive (20) for driving the fluidic sample located in a mobile phase;
a fluid valve (95) according to one of the claims 1 to 11 for introducing the fluidic sample into the mobile phase;
a sample separation unit (30) for separating the fluidic sample located in the mobile phase.

13. The sample separation device (10) according to claim 12, further comprising at least one of the following features:
the sample separation unit (30) is formed as a chromatographic separation unit, in particular as a chromatographic separation column;
the sample separation device (10) is configured for analyzing at least one physical, chemical and/or biological parameter of at least one fraction of the fluidic sample;
the sample separation device (10) comprises at least one from the group consisting of a detector device, a device for chemical, biological and/or pharmaceutical analysis, a liquid chromatography device and an HPLC device;
the fluid drive (20) is configured for driving the mobile phase at a high pressure;
the fluid drive (20) is configured for driving the mobile phase at a pressure of at least 100 bar, in particular of at least 500 bar, further in particular of at least 1000 bar;
the sample separation device (10) is configured as a microfluidic device;
the sample separation device (10) is configured as a nanofluidic device;
the sample separation device (10) is configured as a preparative device;
the sample separation device (10) comprises an injector unit (40) with the fluid valve (95) for introducing the fluidic sample into a fluidic path between the fluid drive (20) and the sample separation unit (30);
the sample separation device (10) comprises a detector (50), in particular a fluorescence detector or UV absorption detector, for detecting the separated fluidic sample;
the sample separation device (10) comprises a sample fractionator or a drain container (60) for fractionating the separated fluidic sample.

14. A method for manufacturing a fluid valve (95) for a sample separation device (10), wherein the method comprises:
providing a first valve component (102) and a second valve component (104) such that they adjoin each other and are rotatable or longitudinally displaceable relative to each other;
forming the first valve component (102) and the second valve component (104) such that between them in at least one switching state at least one switchable fluid channel (106) is formed,
wherein the at least one fluid channel (106) is formed of at least one groove (118) in the first valve component (102) and at least two fluid ports (120) at the second valve component (104), and wherein in different switching states of the fluid valve (95) the fluid ports (120) can be brought into different fluidic coupling states with respect to the at least one groove (118);
providing at least a part of a surface of at least one of the first valve component (102) and the second valve component (104) with a gold-containing and/or platinum-containing coating (110);
wherein the fluid valve (95) is a shear valve,
wherein the first valve component (102) comprises a contact surface (108) as part of its surface and the second valve component (104) comprises a contact surface (108) as part of its surface, wherein the first valve component (102) and the second valve component (104) adjoin each other at the contact surfaces (108), and
wherein at least a part of the contact surface (108) of at least one of the first valve component (102) and the second valve component (104) is provided with the gold-containing and/or platinum-containing coating (110), so that a lubrication between the first valve component (102) and the second valve component (104), a balance of the valve components and a low-wear operation are promoted.

15. The method according to claim 14, wherein the coating (110) is formed by a non-selective deposition process on the respective valve component (102, 104).

## Revendications

1. Vanne fluidique (95) pour un séparateur d'échantillons (10), la vanne fluidique (95) comprenant :
un premier composant de vanne (102) ;
un second composant de vanne (104) ;
dans laquelle le premier composant de vanne (102) et le second composant de vanne (104) sont adjacents l'un à l'autre, peuvent tourner ou être déplacés longitudinalement l'un par rapport à l'autre, et sont conçus de telle manière qu'au moins un canal de fluide (106) commutable est formé entre eux dans au moins un état de commutation ;
dans laquelle le au moins un canal de fluide (106) est formé d'au moins une rainure (118) dans le premier composant de vanne (102) et d'au moins deux raccords fluidiques (120) au niveau du second composant de vanne (104), et dans laquelle les raccords fluidiques (120) peuvent, dans des états de commutation différents de la vanne fluidique (95), être amenés dans des états de couplage fluidique différents par rapport à la au moins une rainure (118) ;
dans laquelle au moins une partie d'une surface d'au moins un parmi le premier composant de vanne (102) et le second composant de vanne (104) est munie d'un revêtement contenant de l'or et/ou du platine (110) ;
dans laquelle la vanne fluidique (95) est une vanne de sécurité ;
dans laquelle le premier composant de vanne (102) présente une surface de contact (108) faisant partie de sa surface et le second composant de vanne (104) présente une surface de contact (108) faisant partie de sa surface, dans laquelle le premier composant de vanne (102) et le second composant de vanne (104) sont adjacents l'un à l'autre au niveau des surfaces de contact (108), et
dans laquelle au moins une partie de la surface de contact (108) d'au moins un parmi le premier composant de vanne (102) et le second composant de vanne (104) est munie du revêtement contenant de l'or et/ou du platine (110), de sorte qu'une lubrification entre le premier composant de vanne (102) et le second composant de vanne (104), un équilibrage des composants de vanne et un fonctionnement entraînant une faible usure sont favorisés.

2. Vanne fluidique (95) selon la revendication 1, dans laquelle le revêtement (110) est formé sur au moins la totalité d'une des surfaces de contact (108) entre le premier composant de vanne (102) et le second composant de vanne (104).

3. Vanne fluidique (95) selon la revendication 1 ou 2, dans laquelle le revêtement (110) est formé sur la surface de contact (108) du premier composant de vanne (102) et sur la surface de contact (108) du second composant de vanne (104).

4. Vanne fluidique (95) selon l'une quelconque des revendications 1 à 3, dans laquelle une contre-surface (183) présentant au moins une structure fluidique (166, 168) avec une autre partie de la surface est opposée à la surface de contact (108) d'au moins un parmi le premier composant de vanne (102) et le second composant de vanne (104) formant l'autre partie de la surface.

5. Vanne fluidique (95) selon la revendication 4, dans laquelle au moins une partie d'au moins une des structures fluidiques (166, 168) et/ou de la contre-surface (183) est munie du revêtement (110) contenant de l'or et/ou du platine.

6. Vanne fluidique (95) selon la revendication 5, dans laquelle la contre-surface (183) est liée à un corps formant cache (124) au niveau du revêtement (110).

7. Vanne fluidique (95) selon l'une quelconque des revendications 1 à 6,
dans laquelle au moins une partie du revêtement (110) présente de l'or dur ou en est constituée ; et/ou
dans laquelle au moins une partie du revêtement (110) présente du cobalt dans une plage comprise entre 0,05 % en poids et 1 % en poids, en particulier dans une plage comprise entre 0,2 % en poids et 0,3 % en poids, et jusqu'à 0,7 % en poids de carbone, le reste étant de l'or.

8. Vanne fluidique (95) selon l'une quelconque des revendications 1 à 7, présentant au moins une des caractéristiques ci-dessous :
le premier composant de vanne (102) et le second composant de vanne (104) sont munis de revêtements (110) différents ;
le revêtement (110) présente plusieurs couches (112, 114), dans laquelle en particulier une première couche (112) du revêtement (110) est formée directement sur un corps de base (116) du composant de vanne (102, 104) respectif, et présente en outre en particulier de l'or pur, et une seconde couche (114) est formée sur la première couche (112) et présente en outre en particulier de l'or dur ;
dans laquelle un corps de base (116), sur lequel est agencé le revêtement (110), d'au moins un des composants de vanne (102, 104) présente du métal, en particulier de l'acier ;
dans laquelle le premier composant de vanne (102) et le second composant de vanne (104) peuvent être déplacés l'un par rapport à l'autre de telle manière qu'au moins deux états de couplage fluidique différents du au moins un canal de fluide (106) peuvent ainsi être ajustés ;
dans laquelle le premier composant de vanne (102) est réalisé sous la forme d'un dispositif formant rotor et le second composant de vanne (104) est réalisé sous la forme d'un dispositif formant stator, dans laquelle le dispositif formant rotor et le dispositif formant stator peuvent tourner l'un par rapport à l'autre.

9. Vanne fluidique (95) selon l'une quelconque des revendications 1 à 8, dans laquelle le premier composant de vanne (102) présente un premier élément de rotor (122) et un second élément de rotor (124), en particulier liés l'un à l'autre, dans laquelle le premier élément de rotor (122) définit au moins une partie (170, 172) du au moins un canal de fluide (106) et dans laquelle le second élément de rotor (124) forme un couvercle du premier élément de rotor (122), en particulier dans laquelle le premier élément de rotor (122) présente, sous la forme d'au moins une partie (172) d'un premier canal de fluide (106), une rainure (118) sur une des deux surfaces principales opposées du premier élément de rotor (122) et, sous la forme d'au moins une partie (170) d'un second canal de fluide (106), au moins un passage (126) à travers le premier élément de rotor (122) et une autre rainure (118) couplée de manière fluidique sur l'autre des deux surfaces principales opposées du premier élément de rotor (122).

10. Vanne fluidique (95) selon l'une quelconque des revendications 1 à 9, présentant au moins une des caractéristiques ci-dessous :
le premier composant de vanne (102) présente, sous la forme d'au moins une partie (172) d'un premier canal de fluide (106), une rainure (118) sur une surface principale du premier composant de vanne (102) tournée vers le second composant de vanne (104) et, sous la forme d'au moins une partie (170) d'un second canal de fluide (106), au moins un passage (126) à travers au moins une partie du premier composant de vanne (102) et une section de conduite (128) couplée de manière fluidique avec celui-ci, dans laquelle en particulier la rainure (118) d'une part et la section de conduite (128) d'autre part s'étendent sur des régions différentes, en particulier des régions radiales, en particulier se chevauchant, du premier composant de vanne (102) ;
présente un élément d'étanchéité (130) qui est agencé afin d'assurer l'étanchéité entre le premier composant de vanne (102) et le second composant de vanne (104), dans laquelle l'élément d'étanchéité (130) est en particulier un anneau d'étanchéité et/ou présente ou est composé de polytétrafluoroéthylène, d'un composite polytétrafluoroéthylène-éthylène-propylène-diène ou d'un élastomère perfluoré, en particulier nanoactivé ;
dans laquelle au moins un parmi le premier composant de vanne (102) et le second composant de vanne (104) présente au moins un matériau d'un groupe constitué d'un métal, d'une matière plastique, en particulier avec des particules de remplissage ou sans particules de remplissage, et d'une céramique ;
des structures fluidiques (106) différentes sont formées dans différentes régions de diamètre du premier composant de vanne (102) ;
au moins une fonction fluidique d'un groupe constitué d'une restriction fluidique, d'un dispositif de retard fluidique permettant de retarder un écoulement fluidique, d'un volume de stockage intermédiaire permettant le stockage intermédiaire d'une quantité de fluide prédéfinie, et d'un dispositif de mélange fluidique, est fournie au moyen du au moins un canal de fluide (106).

11. Vanne fluidique (95) selon l'une quelconque des revendications 1 à 10, dans laquelle au moins une partie (170) d'au moins une structure fluidique (166) du premier composant de vanne (102) est décalée dans la direction axiale (164) par rapport aux surfaces de contact (108) de sorte que, dans au moins un état de commutation de la vanne fluidique (95), ladite partie (170) et au moins une autre partie (172) d'au moins une structure fluidique (166, 168) du premier composant de vanne (102) et/ou du second composant de vanne (104) se chevauchent au moins partiellement lorsqu'on regarde le long de la direction axiale (164), en particulier présentant au moins une des caractéristiques ci-dessous :
la au moins une partie (170) et la au moins une autre partie (172) sont découplées fluidiquement l'une de l'autre dans le au moins un état de commutation dans lequel se produit le chevauchement au moins partiel ;
la au moins une autre partie (172) est formée d'au moins un raccord fluidique (120) du second composant de vanne (104) réalisé sous la forme d'un dispositif formant stator ;
la au moins une autre partie (172) de la au moins une structure fluidique (166) appartient au premier composant de vanne (102) réalisé sous la forme d'un dispositif formant rotor et est décalée dans la direction axiale (164) par rapport à la au moins une partie (170) de la au moins une structure fluidique (166) du dispositif formant rotor.

12. Séparateur d'échantillons (10) permettant de séparer un échantillon fluide, dans laquelle le séparateur d'échantillons (10) présente :
un entraînement de fluide (20) permettant d'entraîner l'échantillon fluidique se trouvant dans une phase mobile ;
une vanne fluidique (95) selon l'une quelconque des revendications 1 à 11, permettant d'introduire l'échantillon fluidique en phase mobile ;
un dispositif de séparation d'échantillons (30) permettant de séparer l'échantillon fluidique en phase mobile.

13. Séparateur d'échantillons (10) selon la revendication 12, présentant en outre au moins une des caractéristiques ci-dessous :
le dispositif de séparation d'échantillons (30) est réalisé sous la forme d'un dispositif de séparation chromatographique, en particulier d'une colonne de séparation chromatographique ;
le séparateur d'échantillons (10) est configuré pour analyser au moins un paramètre physique, chimique et/ou biologique d'au moins une fraction de l'échantillon fluidique ;
le séparateur d'échantillons (10) présente au moins un élément parmi le groupe constitué d'un détecteur, d'un appareil d'analyse chimique, biologique et/ou pharmaceutique, d'un appareil de chromatographie liquide et d'un appareil HPLC ;
l'entraînement fluidique (20) est configuré pour entraîner la phase mobile à une pression élevée ;
l'entraînement fluidique (20) est configuré pour entraîner la phase mobile à une pression d'au moins 100 bars, en particulier d'au moins 500 bars, en particulier d'au moins 1000 bars ;
le séparateur d'échantillons (10) est configuré en tant qu'appareil microfluidique ;
le séparateur d'échantillons (10) est configuré en tant qu'appareil nanofluidique ;
le séparateur d'échantillons (10) est configuré en tant qu'appareil préparatif ;
le séparateur d'échantillons (10) présente un dispositif d'injection (40) comprenant la vanne fluidique (95) permettant d'introduire l'échantillon fluidique dans un chemin fluidique entre l'entraînement fluidique (20) et le dispositif de séparation d'échantillons (30) ;
le séparateur d'échantillons (10) présente un détecteur (50), en particulier un détecteur de fluorescence ou un détecteur d'absorption UV, permettant de détecter l'échantillon fluidique séparé ;
le séparateur d'échantillons (10) présente un fractionneur d'échantillons ou un récipient de drainage (60) permettant de fractionner l'échantillon fluidique séparé.

14. Procédé de fabrication d'une vanne fluidique (95) pour un séparateur d'échantillons (10), dans lequel le procédé comprend les étapes consistant à :
fournir un premier composant de vanne (102) et un second composant de vanne (104) de telle manière qu'ils sont adjacents l'un à l'autre et sont mobiles en rotation ou en déplacement longitudinal l'un par rapport à l'autre ;
réaliser le premier composant de vanne (102) et le second composant de vanne (104) de telle manière qu'au moins un canal de fluide (106) commutable est formé entre eux dans au moins un état de commutation,
dans lequel le au moins un canal de fluide (106) est formé d'au moins une rainure (118) dans le premier composant de vanne (102) et d'au moins deux raccords fluidiques (120) au niveau du second composant de vanne (104), et dans lequel, dans des états de commutation différents de la vanne fluidique (95), les raccords fluidiques (120) peuvent être amenés dans des états de couplage fluidique différents par rapport à la au moins une rainure (118) ;
munir d'un revêtement contenant de l'or et/ou du platine (110) au moins une partie d'une surface d'au moins un parmi le premier composant de vanne (102) et le second composant de vanne (104) ;
dans lequel la vanne fluidique (95) est une vanne de sécurité ;
dans lequel le premier composant de vanne (102) présente, sous la forme d'une partie de sa surface, une surface de contact (108) et le second composant de vanne (104) présente, sous la forme d'une partie de sa surface, une surface de contact (108), dans lequel le premier composant de vanne (102) et le second composant de vanne (104) sont adjacents l'un à l'autre au niveau des surfaces de contact (108), et
dans lequel au moins une partie de la surface de contact (108) d'au moins un parmi le premier composant de vanne (102) et le second composant de vanne (104) est munie du revêtement contenant de l'or et/ou du platine (110), de sorte qu'une lubrification entre le premier composant de vanne (102) et le second composant de vanne (104), un équilibrage des composants de vanne et un fonctionnement entraînant une faible usure sont favorisés.

15. Procédé selon la revendication 14, dans lequel le revêtement (110) est formé au moyen d'un procédé de dépôt non sélectif sur le composant de vanne (102, 104) respectif.
